(19) Europäisches Patentamt
European Patent Office
Office européen des brevets

(11) **EP 3 862 065 B1**

(12) **EUROPÄISCHE PATENTSCHRIFT**

(45) Veröffentlichungstag und Bekanntmachung des Hinweises auf die Patenterteilung:
**29.11.2023   Patentblatt 2023/48**

(21) Anmeldenummer: **21166208.5**

(22) Anmeldetag: **14.10.2015**

(51) Internationale Patentklassifikation (IPC):
**B01D 46/00** *(2022.01)*     **B01D 46/04** *(2006.01)*
**B01D 46/10** *(2006.01)*

(52) Gemeinsame Patentklassifikation (CPC):
**B01D 46/04; B01D 46/10; B01D 46/56; B01D 46/58; B01D 46/71**

(54) **ABREINIGUNGSVORRICHTUNG, FILTERSYSTEM UND ANLAGE**

CLEANING DEVICE, FILTER SYSTEM AND PLANT

DISPOSITIF DE NETTOYAGE, SYSTÈME DE FILTRATION ET INSTALLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2014  EP 14003655**
**28.10.2014  DE 202014008509 U**

(43) Veröffentlichungstag der Anmeldung:
**11.08.2021   Patentblatt 2021/32**

(62) Dokumentnummer(n) der früheren Anmeldung(en) nach Art. 76 EPÜ:
**15781073.0 / 3 212 306**

(73) Patentinhaber: **Boehringer Ingelheim Pharma GmbH & Co. KG**
**55216 Ingelheim am Rhein (DE)**

(72) Erfinder: **BAUER, Rainer**
**55216 Ingelheim am Rhein (DE)**

(74) Vertreter: **Weyers, Christopher**
**Von Rohr**
**Patentanwälte Partnerschaft mbB**
**Rüttenscheider Straße 62**
**45130 Essen (DE)**

(56) Entgegenhaltungen:
**EP-A1- 1 647 319**     **EP-A2- 2 128 394**
**WO-A1-96/03195**     **WO-A2-2014/110354**
**JP-A- 2008 221 106**

**Beschreibung**

Die vorliegende Erfindung betrifft eine Abreinigungsvorrichtung zur Abreinigung eines Filters, ein Filtersystem mit einem Filter und einer Abreinigungsvorrichtung zur Abreinigung des Filters und eine Anlage, insbesondere für Beschichtungsprozesse, mit einem Anlagengehäuse, einem Filter und einer Abreinigungsvorrichtung zur Abreinigung des Filters.

Unter dem Begriff "Abreinigungsverfahren" sind bei der vorliegenden Erfindung insbesondere alle Verfahren, Prozesse und Methoden zu verstehen, mittels derer die Abreinigung eines Filters, eines Filtersystems und/oder einer Anlage vor, während und/oder nach Filtration mittels des Filters geplant, analysiert, implementiert, koordiniert und/oder geregelt bzw. gesteuert wird.

Abreinigungsverfahren sind in vielen Anlagen und/oder Filtersystemen notwendig, um verschmutzte bzw. zugesetzte Filter zu reinigen. Bei heutigen Abreinigungsverfahren zur abschnittsweisen Abreinigung eines Filters, der mehrere Filterabschnitte, insbesondere Filterkerzen, aufweist, werden die Filterabschnitte in zueinander um feste bzw. konstante Zeitintervalle beabstandeten Abreinigungsvorgängen abgereinigt. Dabei kann es passieren, dass der Filter bzw. einer der Filterabschnitte abgereinigt wird, obwohl dies zum Zeitpunkt der Abreinigung noch nicht erforderlich ist. Insbesondere kann bei einem derartigen Abreinigungsverfahren ein sich auf dem Filter bildender Filterkuchen zu früh und/oder zu spät mittels der Abreinigung abgereinigt bzw. entfernt werden. Dementsprechend sind mit einem derartigen Abreinigungsverfahren auch zusätzliche und vermeidbare Kosten verbunden.

Unter dem Begriff "Anschlussvorrichtung" ist bei der vorliegenden Erfindung vorzugsweise eine konstruktive Einrichtung, insbesondere für Filtersysteme, Abreinigungsvorrichtungen und/oder Anlagen, zu verstehen, beispielsweise als Adapter oder Zwischenstück, die vorzugsweise dazu ausgebildet ist, einen Filter mit einer Abreinigungsvorrichtung fluidisch zu verbinden. Insbesondere ist eine Anschlussvorrichtung dazu ausgebildet, ein Medium, insbesondere ein Fluid der Abreinigungsvorrichtung, zum - vorzugsweise mit der Anschlussvorrichtung verbundenen - Filter zu leiten.

Unter dem Begriff "Abreinigungsvorrichtung" ist bei der vorliegenden Erfindung vorzugsweise eine Vorrichtung zu verstehen, die dazu ausgebildet ist, einen zugeordneten Filter - vorzugsweise pneumatisch bzw. mittels Druckluft - abzureinigen, vorzugsweise wobei Partikel im oder auf dem Filter und/oder ein sich auf dem Filter bildender oder gebildeter Filterkuchen vom Filter teilweise oder vollständig vom Filter entfernt werden bzw. wird.

Besonders bevorzugt erzeugen Abreinigungsvorrichtungen einen Druckimpuls, insbesondere zumindest im Wesentlichen entgegen derjenigen Strömungsrichtung, die bei einer Filtration mittels des Filters im Filter vorliegt. Abreinigungsvorrichtungen werden sowohl während des fortlaufenden Betriebs des Filters bzw. des Filtersystems (Online-Betriebsweise) als auch bei Unterbrechung des Betriebs des Filters bzw. des Filtersystems (Offline-Betriebsweise) eingesetzt.

Unter dem Begriff "Filtersystem" ist bei der vorliegenden Erfindung ein System zu verstehen, das mindestens einen Filter und mindestens eine Abreinigungsvorrichtung zur Abreinigung des Filters aufweist. Der Filter eines Filtersystems ist vorzugsweise dazu ausgebildet, im Rahmen der Filtration Feststoffe/Partikel eines Fluids aus dem Fluid zu entfernen bzw. zu filtrieren. Insbesondere erfolgt die Abscheidung der Partikel des zu reinigenden Fluides durch ein Filtermedium des Filters, im Inneren des Filtermediums und/oder mittels eines sich auf dem Filtermedium bildenden oder gebildeten Filterkuchens. Filter sind nach dem diesem Verständnis insbesondere Oberflächenfilter, wie Filterkerzen oder Filterschläuche, die insbesondere dazu ausgebildet sind, Partikel eines Gases bzw. Rohgases mittels Kuchenfiltration und/oder Tiefenfiltration abzuscheiden.

Unter dem Begriff "Anlage" sind bei der vorliegenden Erfindung insbesondere Industrieanlagen und/oder verfahrenstechnische Anlagen zu verstehen. Bei der vorliegenden Erfindung handelt es sich vorzugsweise um Beschichtungsanlagen zur Beschichtung eines Produkts mit einer Schicht. Insbesondere sind Anlagen nach diesem Verständnis dazu ausgebildet, pharmazeutische Produkte, wie Pellets, zu beschichten. Vorzugsweise erfolgt die Beschichtung mittels Wirbelschichtprozessen, insbesondere wobei das zu beschichtende Produkt als Wirbelschicht fluidisiert wird. Anlagen gemäß diesem Verständnis weisen ein Filtersystem mit einem Filter und eine Abreinigungsvorrichtung zur Abreinigung des Filters auf, insbesondere um beim Beschichtungsprozess Partikel, wie Staub, von einem Rohgas abzuscheiden und/oder dem Beschichtungsprozess wieder zuzuführen.

Abreinigungsvorrichtungen sind in vielen Verfahren notwendig, um verschmutzte bzw. zugesetzte Filter zu reinigen. Heutige Abreinigungsvorrichtungen, Filtersysteme und/oder Anlagen weisen Abreinigungsvorrichtungen auf, die derart von zugeordneten Filtern räumlich beabstandet sind, dass bei Filtration das gereinigte Medium bzw. das Reingas aus dem Filter, insbesondere dem Filterausgang des Filters, entweichen kann. Die DE 298 23 965 U1 und die EP 1 507 579 B1 offenbaren Druckluft-Impuls-Injektorsysteme, die zum Reinigen und Regenerieren einzelner Filterkerzen mittels Druckluft oberhalb der Filter angeordnet und beabstandet sind und zur Abreinigung Druckluft zunächst in den die Druckluft-Impuls-Injektorsysteme umgebenden Raum und anschließend in die jeweilige Filterkerze blasen. Aufgrund des Abstandes zwischen dem Ausgang der Abreinigungsvorrichtung und der jeweils abzureinigenden Filterkerze entstehen hohe Strömungsverluste, die dazu führen können, dass die jeweilige Filterkerze, insbesondere im Halsbereich, nicht vollständig abgereinigt wird und/oder sehr häufig bzw. wiederholt abgereinigt werden muss.

Die WO 96/03195 A1 offenbart ein Element zur Steuerung des Flusses für ein Reinigungssystem einer Filterpatrone. Das Element ist über eine Düse an ein Einblasrohr anschließbar und weist einen konischen Abschnitt und einen zylindrischen Abschnitt auf. Bei einem Reinigungsvorgang wird Luft über die äußere Oberfläche des konischen Abschnitts geblasen und über den zylindrischen Abschnitt in Richtung des Filters abgelenkt.

Die WO 2014/110354 A2 offenbart einen abreinigbaren Filter, der ein Gehäuse mit darin angeordnetem Filterelement umfasst, wobei das Filterelement im in das Gehäuse installierten Zustand abgereinigt werden kann. Der Filter kann einen Luftverteiler aufweisen, der sich von einem Drucklufteinlass ausgehend konisch verjüngt und eine Vielzahl von Öffnungen aufweist, um die Druckluft gleichmäßig über eine Oberfläche des Filters zu verteilen.

Die EP 1 647 319 A1 betrifft eine Düse zur Abreinigung von Filtern, die einen rohrförmigen Abschnitt aufweist, der sich an einen Lavaldüsenabschnitt anschließt und längliche, seitliche Öffnungen aufweist.

Die JP 2008 221106 A betrifft eine Filtereinrichtung, die mittels eines Druckluftimpulses abgereinigt werden kann. Die Vorrichtung zur Abreinigung ist bewegbar, um bei der Abreinigung eine Passage zu verschließen, um den Effekt des Druckluftimpulses zu erhöhen.

Die EP 2 128 394 A2 offenbart einen Diffusor für eine Arbeitsmaschine mit einem Verbrennungsmotor, insbesondere landwirtschaftlicher Fahrzeuge. Der Diffusor weist seitliche Öffnungen auf, durch die Umgebungsluft angesaugt werden kann, um die Abgase und Diffusorwandungen zu kühlen.

Der vorliegenden Erfindung liegt die Aufgabe zugrunde, eine Abreinigungsvorrichtung, ein Filtersystem sowie eine Anlage anzugeben, wodurch eine kompakte Bauform und/oder eine zuverlässige, effiziente, kostengünstige, wartungsarme und/oder verlustarme Abreinigung des Filters bzw. eines Filterabschnitts des Filters ermöglicht oder unterstützt wird.

Die obige Aufgabe wird durch eine Abreinigungsvorrichtung gemäß Anspruch 1, ein Filtersystem gemäß Anspruch 13 oder einer Anlage gemäß Anspruch 14 gelöst. Vorteilhafte Weiterbildungen sind Gegenstand der Unteransprüche.

Eine vorschlagsgemäße Abreinigungsvorrichtung zur Abreinigung eines Filters weist eine vorschlagsgemäße Anschlussvorrichtung auf, um den Filter an die Abreinigungsvorrichtung anzuschließen.

Ein Aspekt der vorliegenden Erfindung liegt darin, dass die Anschlussvorrichtung eine Seitenwand aufweist, die einen entlang einer Längsachse der Anschlussvorrichtung zunehmenden Innenquerschnitt begrenzt und seitlich Öffnungen mit zugeordneten Hauptachsen aufweist.

Die Seitenwand weist einen ersten Abschnitt mit den Öffnungen, einen zweiten, öffnungsfreien Abschnitt im Bereich des größten Innenquerschnitts und einen dritten Abschnitt mit dem kleinsten Innenquerschnitt der Anschlussvorrichtung auf.

Die Anschlussvorrichtung weist am axialen Ende des zweiten Abschnitts einen Stutzen zur Verbindung mit dem Filter und am axialen Ende des dritten Abschnitts einen Stutzen zur Verbindung mit der Abreinigungsvorrichtung auf.

Durch den öffnungsfreien Abschnitt im Bereich des größten Innenquerschnitts werden die Strömungsverluste während der Abreinigung reduziert und/oder eine Druckerhöhung mittels der Anschlussvorrichtung während der Abreinigung ermöglicht, insbesondere ohne dass das Medium, mit dem der Filter abgereinigt wird, durch die Öffnungen der Anschlussvorrichtungen von innen nach außen strömt und damit keinen Beitrag zur Abreinigung des Filters leisten würde.

Vorzugsweise verlaufen die Hauptachsen der Öffnungen schräg zur Seitenwand und weisen von außen nach innen jeweils in Richtung eines Innenquerschnitts, der größer ist als ein Innenquerschnitt, in den die jeweilige Öffnung mündet. Auf diese Weise ermöglicht die vorschlagsgemäße Anschlussvorrichtung einen unmittelbaren Anschluss des Filters an die und/oder eine Abstützung der Abreinigungsvorrichtung sowohl während der Abreinigung als auch während der Filtration.

Insbesondere gelangt das Medium, mit dem der Filter abgereinigt wird, bei und/oder zur Abreinigung von der Abreinigungsvorrichtung über die Anschlussvorrichtung direkt zum Filter, während das mittels des Filters gereinigte Medium bzw. das Reingas aus dem Filter durch die Öffnungen der Anschlussvorrichtungen von innen nach außen entweichen kann. Folglich ist es nicht erforderlich, die Anschlussvorrichtung für den jeweiligen Betrieb des Filters zu wechseln, zu verändern und/oder räumlich zu bewegen.

Die schräg zur Seitenwand verlaufenden Öffnungen reduzieren vorzugsweise Strömungsverluste sowohl während der Abreinigung als auch während der Filtration.

Die Konstruktionsweise der Anschlussvorrichtung erhöht vorzugsweise und in vorteilhafter Weise den Massenstrom und/oder den Druck des Mediums, mit dem der Filter abgereinigt wird, und/oder reduziert die Gefahr einer möglichen Ablösung der Strömung an der Seitenwand der Anschlussvorrichtung während der Abreinigung.

Vorzugsweise sind die Öffnungen der Anschlussvorrichtung an einer oder mehreren Ebenen orientiert, die orthogonal zur Längsachse der Anschlussvorrichtung ausgerichtet ist bzw. sind. Dies gewährleistet eine kostengünstige Herstellung der Anschlussvorrichtung und ermöglicht, die Seitenwand der Anschlussvorrichtung mit möglichst vielen Öffnungen zu versehen, insbesondere ohne dass die Anschlussvorrichtung an Stabilität verliert.

Ein vorschlagsgemäßes Filtersystem mit einem Filter und einer Abreinigungsvorrichtung zur Abreinigung des Filters weist die vorschlagsgemäße Anschlussvorrichtung zum Anschluss des Filters an die Abreinigungsvorrichtung auf. Auf diese Weise können ebenfalls die bereits erläuterten Vorteile erreicht werden.

Eine vorschlagsgemäße Anlage, insbesondere für Beschichtungsprozesse, mit einem Anlagengehäuse, einem Filter und einer Abreinigungsvorrichtung zur Abreinigung des Filters, weist die vorschlagsgemäße Anschlussvorrichtung auf. Auf diese Weise können ebenfalls die bereits erläuterten Vorteile erreicht werden.

Vorzugsweise weist die Anlage ein Anlagengehäuse auf, das im Inneren eine Speichereinrichtung aufweist, die dazu ausgebildet ist, die Abreinigungsvorrichtung mit einem Medium, mit dem der Filter abgereinigt wird, insbesondere Druckluft, zu versorgen. Dies reduziert den Abstand zwischen der Abreinigungsvorrichtung und einer Speichereinrichtung, die außerhalb des Anlagengehäuses angeordnet ist. Damit einhergehend werden die Strömungsverluste der Abreinigungsvorrichtung reduziert und/oder der vorhandene Bauraum im Anlagengehäuse effizient genutzt bzw. eine kompakte Anlage ermöglicht.

Vorzugsweise weist das Anlagengehäuse im Inneren ein Ventil zur Auslösung eines Abreinigungsvorgangs auf. Dies ermöglicht ebenfalls eine optimierte Bauraumnutzung im Anlagengehäuse sowie eine schnelle Steuerung bzw. Regelung der Abreinigung. Das Ventil verbindet vorzugsweise die Speichereinrichtung mit der Anschlussvorrichtung, insbesondere fluidisch und/oder an einem dem Filter abgewandten Ende oder Ende mit verringertem Innenquerschnitt der Anschlussvorrichtung.

Weitere Vorteile, Merkmale, Eigenschaften und Aspekte der vorliegenden Erfindung ergeben sich aus den Ansprüchen und der folgenden Beschreibung bevorzugte Ausführungsformen anhand der Zeichnung. Es zeigt:

Fig. 1    einen schematischen Schnitt einer vorschlagsgemäßen Anlage mit einem vorschlagsgemäßen Filtersystem, einer vorschlagsgemäßen Anschlussvorrichtung sowie einer vorschlagsgemäßen Abreinigungsvorrichtung;

Fig. 2    eine perspektivische Ansicht einer vorschlagsgemäßen Anschlussvorrichtung;

Fig. 3    einen schematischen Schnitt eines vorschlagsgemäßen Filtersystems mit der Anschlussvorrichtung, einem Ventil im geschlossenen Zustand sowie einem abschnittsweise dargestellten Filter;

Fig. 4    einen schematischen Schnitt des Filtersystems gemäß Fig. 3 mit dem Ventil im geöffneten Zustand;

Fig. 5    eine schematische Draufsicht des vorschlags

gemäßen Filtersystems sowie einer vorschlagsgemäßen Abreinigungsvorrichtung mit einer Speichereinrichtung und mehreren Steuereinrichtungen;

Fig. 6    eine schematische Seitenansicht einer vorschlagsgemäßen Anlage mit einem vorschlagsgemäßen Filtersystem, wobei ein erster Filterabschnitt des Filters abgereinigt wird;

Fig. 7    eine schematische Seitenansicht der Anlage gemäß Fig. 6, wobei ein zweiter Filterabschnitt des Filters abgereinigt wird;

Fig. 8    ein schematisches Blockschaltbild einer einem bevorzugten Abreinigungsverfahren zugrundeliegenden Regelung;

Fig. 9    eine schematische Darstellung des Drucks als Funktion der Zeit im bevorzugten Abreinigungsverfahren gemäß einer ersten Verfahrensvariante; und

Fig. 10    eine schematische Darstellung des Drucks als Funktion der Zeit im bevorzugten Abreinigungsverfahren gemäß einer zweiten Verfahrensvariante.

In den teilweise nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden können, auch wenn von einer wiederholten Beschreibung abgesehen wird.

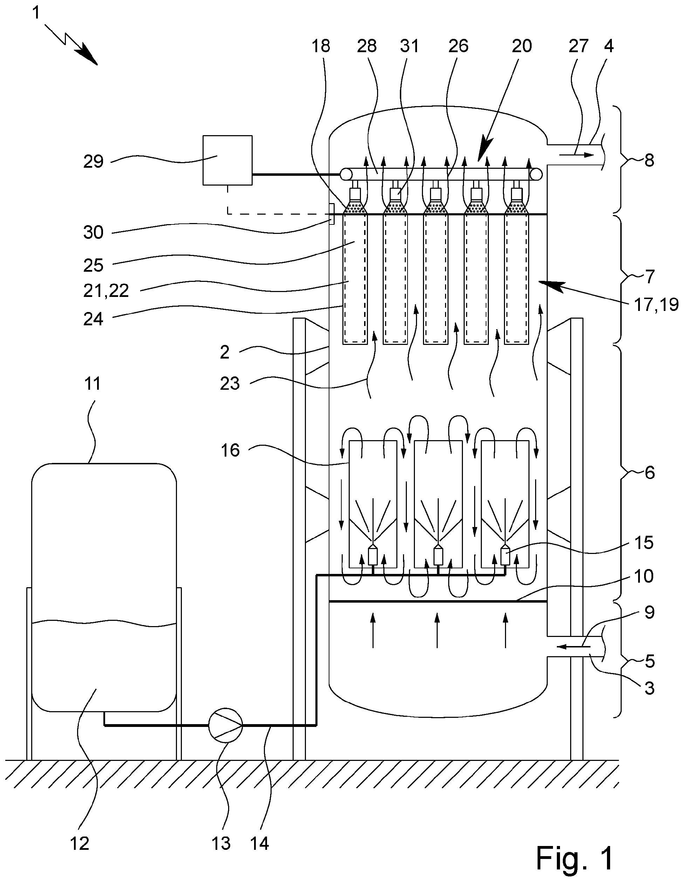

Die in Fig. 1 dargestellte Anlage 1 ist vorzugsweise dazu ausgebildet, Beschichtungsprozesse durchzuführen. Insbesondere handelt es sich bei der Anlage 1 um eine Wirbelschichtbeschichtungsanlage für die Herstellung von Pellets (nicht dargestellt) bzw. für die Pelletierung im Rahmen einer vorzugsweise pharmazeutischen Produktion.

Die Anlage 1 weist vorzugsweise ein Anlagengehäuse 2 mit einem Gehäuseeinlass 3 und einem Gehäuseauslass 4 auf.

Vorzugsweise ist das Anlagengehäuse 2 als Reaktor ausgebildet. Besonders bevorzugt erfolgt die Pelletierung bzw. die Beschichtung/Herstellung der Pellets im Inneren des Anlagengehäuses 2.

Vorzugsweise ist das Anlagengehäuse 2 in einen Zuluftbereich 5, Sprühbereich 6, Filterbereich 7 und Dombereich/Reingasbereich 8 unterteilt und/oder unterteilbar.

Der Gehäuseeinlass 3 ist vorzugsweise fluidisch mit einem Zuluftsystem (nicht dargestellt) verbunden, das dazu ausgebildet ist, die Anlage 1 bzw. das Anlagengehäuse 2, insbesondere den Zuluftbereich 5, mit einer Zuluft 9 zu versorgen, insbesondere wobei die Zuluft 9 mittels des Zuluftsystem für die Beschichtung konditioniert ist.

Vorzugsweise ist der Zuluftbereich 5 mittels eines Siebbodens 10 vom Sprühbereich 6 getrennt.

Insbesondere wird die Zuluft 9 durch den Siebboden 10 vom Zuluftbereich 5 in den Sprühbereich 6 geleitet bzw. geführt.

Die Anlage 1 weist vorzugsweise einen Suspensionsbehälter 11 auf, der im Inneren eine Suspension 12 oder ein anderes Fluid für den Beschichtungsprozess beinhaltet.

Die Suspension 12 wird vorzugsweise mittels einer Suspensionspumpe 13 über eine Suspensionsleitung 14 dem Anlagengehäuse 2 zugeführt und/oder in das Anlagengehäuse 2 gepumpt.

Vorzugsweise sind im Sprühbereich 6 eine oder mehrere Düsen 15 angeordnet, die dazu ausgebildet sind, die Suspension 12 im Anlagengehäuse 2, insbesondere im Sprühbereich 6, zu zerstäuben und/oder auf die Pellets (nicht dargestellt) aufzutragen, vorzugsweise wobei die Pellets im Rahmen des Wirbelschichtbeschichtungsprozesses fluidisiert sind und/oder sich im Sprühbereich 6 als Wirbelschicht bewegen.

Vorzugsweise sind die Düsen 15 jeweils in einem Rohr, insbesondere in einem Wursterrohr 16, angeordnet.

Die Pellets werden vorzugsweise im Wursterrohr 16 an den Düsen 15 vorbeigeführt und mit der Suspension 12 mittels der Düsen 15 besprüht bzw. beschichtet. Vorzugsweise werden die Pellets im Wursterrohr 16 nach oben bzw. entgegen die Schwerkraft mittels der Zuluft 9 geführt bzw. geblasen.

Außerhalb der Wursterrohre 16 fallen die Pellets vorzugsweise in Richtung des Siebbodens 10 und/oder mit der Schwerkraft nach unten. Auf diese Weise werden die Pellets entlang einer zumindest im Wesentlichen ellipsoiden Bahn im Anlagengehäuse 2 beschichtet.

Bei der dargestellten Ausführungsform handelt es sich insbesondere um eine Bottom-Spray-Ausführung, vorzugsweise wobei die Düsen 15 nach oben zeigen. Es sich jedoch auch andere Ausführungsformen oder Anordnungen in der Anlage 1 und/oder im Anlagengehäuse 2 möglich.

Im Filterbereich 7 ist vorzugsweise ein vorschlagsgemäßes Filtersystem 17 angeordnet.

Das Filtersystem 17 weist eine Anschlussvorrichtung 18 auf, die dazu ausgebildet ist, einen dem Filtersystem 17 zugeordneten Filter 19 an eine ebenfalls dem Filtersystem 17 zugeordnete Abreinigungsvorrichtung 20 anzuschließen.

Der Filter 19, vorzugsweise ein Partikelfilter, ist vorzugsweise im Inneren des Anlagengehäuse 2, insbesondere oberhalb des Sprühbereichs 6 und/oder im Filterbereich 7, und/oder im Bereich des Gehäuseauslasses 4 angeordnet. Es sind jedoch auch andere Anordnungen und/oder konstruktive Lösungen möglich.

Der Filter 19 trennt vorzugsweise den Sprühbereich 6 vom Dombereich 8, insbesondere gasdurchlässig und/oder partikelrückhaltend.

Vorzugsweise weist der Filter 19 mehrere Filterabschnitte 21 auf und/oder ist in mehrere Filterabschnitte 21 unterteilt und/oder unterteilbar. Besonders bevorzugt sind die Filterabschnitte 21 zueinander räumlich beabstandet und/oder als separate Baueinheiten des Filters 19 ausgebildet.

Ganz besonders bevorzugt sind die Filterabschnitte 21 als längliche, rohrartige und/oder zylinderförmige Oberflächenfilter, insbesondere als Filterkerzen 22, ausgebildet, die vorzugsweise vom Dombereich 8 in den Filterbereich 7 ragen.

Vorzugsweise wird die Filterkerze 22 während der Filtration mittels des Filters 19 von außen nach innen mit einem zu filtrierenden Medium, insbesondere einem Rohgas 23, durchströmt, wie in Fig. 1 dargestellt.

Insbesondere ist die Oberfläche des Filterabschnitts 21 bzw. der Filterkerze 22 als Filtereingang 24 und die durch Strichlinien angedeutete Innenseite des Filterabschnitts 21 bzw. der Filterkerze 22 als Filterausgang 25 ausgebildet.

Das mittels des Filters 19 filtrierte bzw. gereinigte Medium, insbesondere ein Reingas 26, wird vorzugsweise mittels der Anschlussvorrichtung 18 in den Dombereich 8 des Anlagengehäuses 2 geführt, um anschließend als Abluft 27 das Anlagengehäuse 2 über den Gehäuseauslass 4 zu verlassen.

Insbesondere derjenige Teil der Suspension 12, der nicht an den Pellets haftet, wird vorzugsweise als Staub, insbesondere als Suspensionsstaub bzw. Rohgas 23, vom Sprühbereich 6 in den Filterbereich 7 getragen.

Der Filter 19 ist insbesondere dazu ausgebildet, die staubbeladene Luft bzw. das Rohgas 23, zu filtrieren und anschließend als Reingas 26 - vorzugsweise mittels der Anschlussvorrichtung 18 - in den Dombereich 8 und/oder zum Gehäuseauslass 4 zu leiten.

Vorzugsweise setzt sich der Filter 19 und/oder einzelne Filterabschnitte 21 während der Filtration des Rohgases 23 zunehmend mit Partikeln, insbesondere dem Suspensionsstaub, zu bzw. verstopft.

Die Abreinigungsvorrichtung 20 ist dazu ausgebildet, den Filter 19 abzureinigen. Insbesondere ist die Abreinigungsvorrichtung 20 dazu ausgebildet, den Staub der Suspension 12 oder andere Partikel aus dem Filter 19 und/oder von der Filteroberfläche zu entfernen und/oder vom Filterbereich 7 in den Sprühbereich 6 zu befördern, insbesondere zu blasen. In Fig. 1 ist die Abreinigungsvorrichtung 20 nicht aktiv bzw. findet keine Abreinigung statt.

Besonders bevorzugt ist die Abreinigungsvorrichtung 20 zumindest teilweise oder vollständig in der Anlage 1, insbesondere im Anlagengehäuse 2, angeordnet. Bei der dargestellten Anordnung ist die Abreinigungsvorrichtung 20 im Dombereich 8 und/oder auf der Reingasseite bzw. oberhalb des Filters 19 bzw. einzelner Filterabschnitte 21 angeordnet. Es sind jedoch auch andere Anordnungen möglich.

Die Abreinigungsvorrichtung 20 weist vorzugsweise eine Speichereinrichtung 28 auf, insbesondere wobei die Speichereinrichtung 28 dazu ausgebildet ist, die Abreinigungsvorrichtung 20 mit einem Medium, insbesondere Druckluft, zu versorgen.

Vorzugsweise ist die Speichereinrichtung 28 zumindest teilweise, bevorzugt vollständig, im Inneren des Anlagengehäuses 2 angeordnet. Besonders bevorzugt ist die Speichereinrichtung 28 im Dombereich 8 und/oder oberhalb des Filters 19 angeordnet.

Vorzugsweise weist bzw. weisen die Anlage 1, das Filtersystem 17 und/oder die Abreinigungsvorrichtung 20 eine Steuereinrichtung 29 auf. Die Steuereinrichtung 29 ist insbesondere dazu ausgebildet, die Abreinigungsvorrichtung 20 und/oder die Abreinigung des Filters 19 zu steuern oder regeln.

Bei der dargestellten Ausführungsform befindet sich die Steuereinrichtung 29 vorzugsweise außerhalb des Anlagengehäuses 2. Es sind jedoch auch andere Anordnungen möglich.

Vorzugsweise weist bzw. weisen die Anlage 1, das Filtersystem 17, die Abreinigungsvorrichtung 20 und/oder die Steuereinrichtung 29 mindestens einen Drucksensor 30 auf, insbesondere wobei der Drucksensor 30 dazu ausgebildet ist, einen Differenzdruck DP zu bestimmen und/oder messen.

Der Differenzdruck DP ist vorzugsweise die Differenz zwischen zwei statischen Drücken, dynamischen Drücken oder Gesamtdrücken eines Fluids. Insbesondere ist der Differenzdruck DP die Differenz des, vorzugsweise statischen, Druckes des Rohgases 23 und des, vorzugsweise statischen, Druckes des Reingases 26.

Vorzugsweise wird der Differenzdruck DP zwischen dem Filtereingang 24 und dem Filterausgang 25, zwischen dem Dombereich 8 und einem der anderen Bereiche des Anlagengehäuses 2 und/oder zwischen dem Gehäuseeinlass 3 und dem Gehäuseauslass 4 mittels des Drucksensors 30 bestimmt und/oder gemessen.

Vorzugsweise steuert oder regelt die Steuereinrichtung 29 ein insbesondere der Abreinigungsvorrichtung 20 und/oder dem Filtersystem 17 zugeordnetes Ventil 31 in Abhängigkeit des Differenzdrucks DP und/oder gemäß des vorschlagsgemäßen Abreinigungsverfahrens.

Insbesondere ist jedem Filterabschnitt 21 bzw. jeder Filterkerze 22 jeweils ein Ventil 31 zugeordnet und/oder ist jeweils ein Filterabschnitt 21 bzw. eine Filterkerze 22 mit einem Ventil 31 fluidisch verbunden, besonders bevorzugt mittels der jeweiligen Anschlussvorrichtung 18. Es sind jedoch auch andere konstruktive Lösungen möglichen, insbesondere bei denen ein Ventil 31 mit mehreren Filterabschnitten 21 fluidisch verbunden ist.

Besonders bevorzugt ist bzw. sind die Anlage 1, das Filtersystem 17, die Abreinigungsvorrichtung 20 und/oder die Steuereinrichtung 29 dazu ausgebildet, mit einem oder mehreren Drucksensoren 30 den Differenzdruck DP zu bestimmen und/oder messen und/oder zur Abreinigung des Filters 19 das oder die Ventile 31 anzusteuern.

Vorzugsweise ist bzw. sind die Anlage 1, das Filtersystem 17, die Abreinigungsvorrichtung 20 und/oder die Steuereinrichtung 29 dazu ausgebildet, ein bevorzugtes Abreinigungsverfahren durchzuführen, das im weiteren Verlauf der Beschreibung erläutert wird.

Durch die Filtrierung des Rohgases 23 bildet sich mit der Zeit vorzugsweise eine Staubschicht, insbesondere ein Filterkuchen 32, auf der Oberfläche des Filters 19, insbesondere der Filterabschnitte 21.

Vorzugsweise nimmt die Masse oder das Volumen, insbesondere die Dicke, und/oder die Dichte des Filterkuchens 32, während der Filtration und/oder bei Betrieb der Anlage 1 zu.

Insbesondere mit der oder durch die Zunahme der Masse, des Volumens und/oder der Dichte des Filterkuchens 32 steigt ebenfalls der Differenzdruck DP.

Vorzugsweise ist der Differenzdruck DP zumindest im Wesentlichen eine Funktion der Masse, des Volumens und/oder der Dichte des Filterkuchens 32 und/oder korreliert der Differenzdruck DP, insbesondere positiv, mit der Masse, dem Volumen und/oder der Dichte des Filterkuchens 32.

Insbesondere wenn der Differenzdruck DP einen vorgegebenen Wert erreicht, überschreitet, oder sich diesem annähert, steuert oder regelt die Steuereinrichtung 29 das oder die Ventile 31 vorzugsweise derart, dass sich das oder die Ventile 31 öffnen und/oder Druckluft oder ein sonstiges Medium aus der Speichereinrichtung 28 durch das oder die Ventile 31 und/oder durch die Anschlussvorrichtung 18 in den Filter 19 und/oder in einen der Filterabschnitte 21 geblasen bzw. geleitet wird.

Vorzugsweise sinkt der Differenzdruck DP durch und/oder während der Abreinigung des Filters 19 und/oder eines der Filterabschnitte 21.

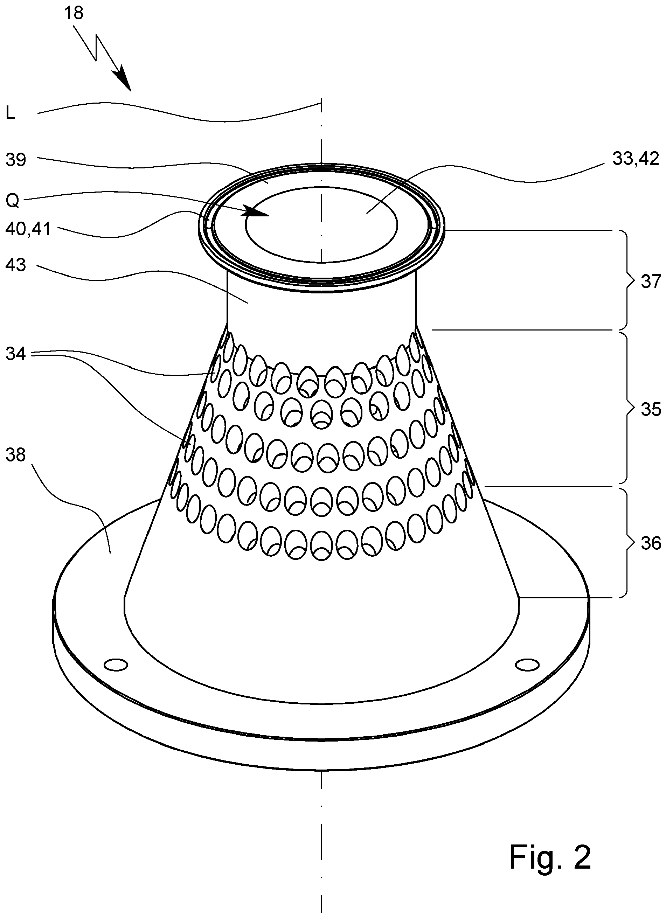

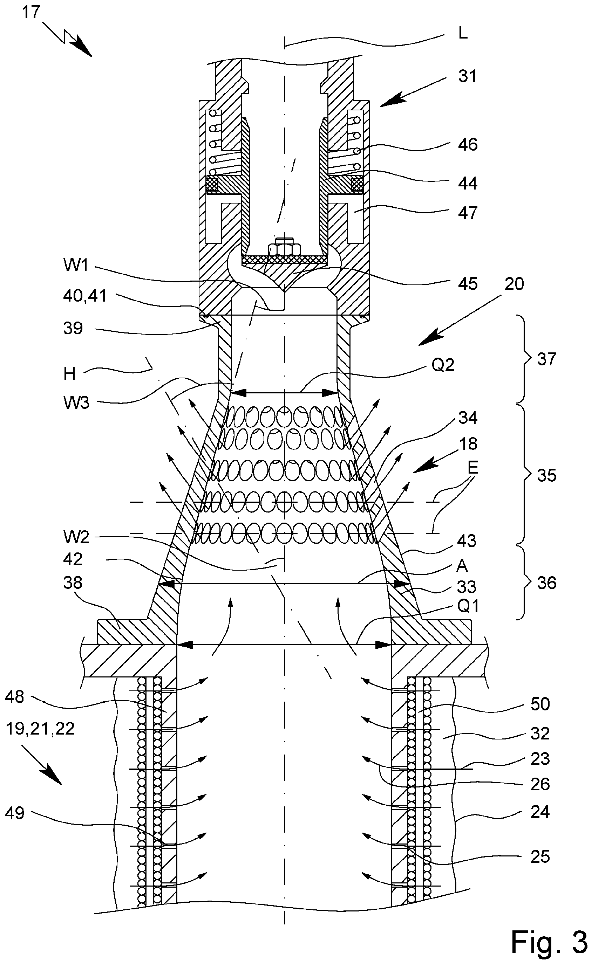

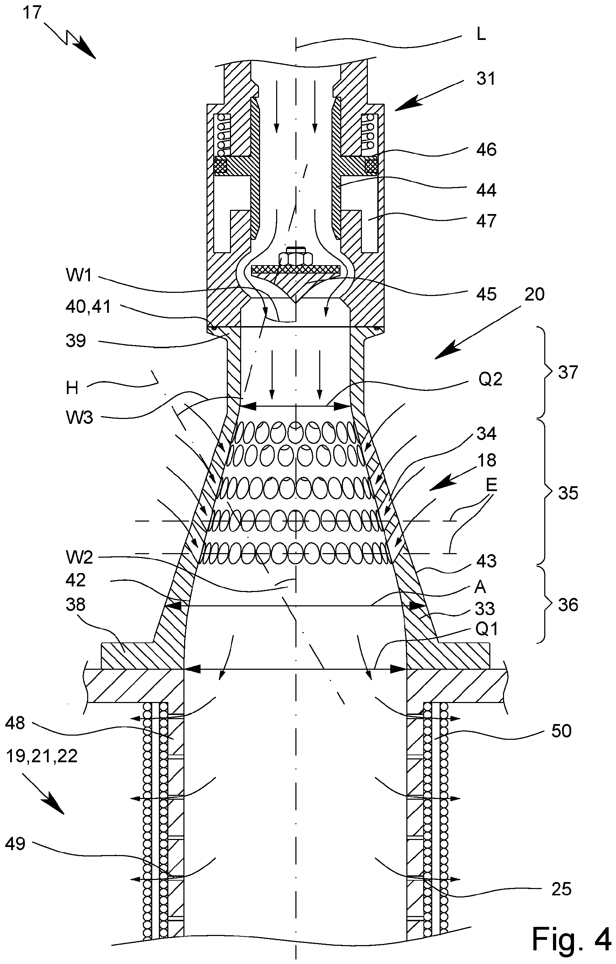

Im Folgenden wird zunächst die vorschlagsgemäße Anschlussvorrichtung 18 isoliert anhand Fig. 2 und anschließend im verbauten Zustand anhand Fig. 3 und Fig. 4 vorgestellt.

Fig. 2 zeigt eine perspektivische Ansicht der Anschlussvorrichtung 18.

Die Anschlussvorrichtung 18 ist dazu ausgebildet, den Filter 19 (in Fig. 2 nicht dargestellt) an die Abreinigungsvorrichtung 20 (nicht dargestellt) anzuschließen, wobei die Anschlussvorrichtung 18 eine Seitenwand 33 aufweist, die einen entlang einer Längsachse L zunehmenden Innenquerschnitt Q begrenzt und Öffnungen 34 mit zugeordneten Hauptachsen H aufweist.

Die Anschlussvorrichtung 18 weist vorzugsweise mindestens zwei, insbesondere mindestens 50, besonders bevorzugt mindestens 100, und/oder höchstens 1000, insbesondere höchstens 500, ganz besonders bevorzugt höchstens 400, Öffnungen 34 auf.

Die Anschlussvorrichtung 18 ist in mindestens zwei, vorzugsweise drei, Bereiche bzw. Abschnitte unterteilt oder unterteilbar.

Die Öffnungen 34 sind in einem ersten Abschnitt 35 der Anschlussvorrichtung 18 angeordnet.

Die Anschlussvorrichtung 18 weist einen zweiten, öffnungsfreien Abschnitt 36 auf. Insbesondere ist der zweite Abschnitt 36 öffnungsfrei und/oder seitlich entlang der Längsachse L geschlossen. Der zweite Abschnitt 36 grenzt vorzugsweise direkt und/oder kontinuierlich an dem ersten Abschnitt 35 an und/oder bildet mit diesem eine unterbrechungsfreie oder stetige Strömungswandung.

Insbesondere weist der zweite Abschnitt 36 den entlang der Längsachse L zunehmenden Innenquerschnitt Q und/oder den größten Innenquerschnitt Q1 zumindest teilweise auf.

Vorzugsweise ist jeder Innenquerschnitt Q des zweiten Abschnitts 36 größer als einer der Innenquerschnitte Q des ersten Abschnitts 35.

Der zweite Abschnitt 36 erstreckt sich vorzugsweise auf mindestens 10 %, besonders bevorzugt auf mindestens 20 %, insbesondere auf mindestens 30 %, und/oder auf höchstens 70 %, besonders bevorzugt auf höchstens 60 %, insbesondere auf höchstens 50 %, der Länge oder Höhe der Anschlussvorrichtung 18.

Die Anschlussvorrichtung 18 und/oder die Seitenwand 33 weist bzw. weisen einen dritten Abschnitt 37 auf, vorzugsweise wobei der dritte Abschnitt 37 einen konstanten, insbesondere zylindrischen, Innenquerschnitt Q aufweist. Der dritte Abschnitt 37 grenzt vorzugsweise direkt an den ersten Abschnitt 35, vorzugsweise auf einer dem zweiten Abschnitt 36 abgewandten Seite des ersten Abschnitts 35.

Der erste Abschnitt 35, der zweite Abschnitt 36 und/oder der dritte Abschnitt 37 sind vorzugsweise fest verbunden oder einstückig ausgebildet.

Vorzugsweise ist der Innenquerschnitt Q des dritten Abschnitts 37 kleiner als der Innenquerschnitt Q des zweiten Abschnitts 36 und/oder kleiner gleich dem bevorzugt kleinsten Innenquerschnitt Q2 des ersten Abschnitts 35. Der Innenquerschnitt Q des dritten Abschnitts 37 ist der kleinste Innenquerschnitt Q2 der Anschlussvorrichtung 18.

Vorzugsweise ist eine Breite bzw. ein Durchmesser des kleinsten Innenquerschnitts Q2 größer als 33 mm und/oder kleiner als 70 mm, vorzugsweise zumindest im Wesentlichen gleich 50,8 mm (2 Zoll), und/oder beträgt eine Breite bzw. ein Durchmesser des kleinsten Innenquerschnitts Q2 mehr als 20 %, vorzugsweise mehr als 30 %, und/oder weniger als 60 %, vorzugsweise weniger als 50 %, eines Durchmessers bzw. einer Breite des größten Innenquerschnitts Q1 der Anschlussvorrichtung 18.

Besonders bevorzugt ist das Verhältnis der Oberfläche des der Anschlussvorrichtung 18 zugeordneten Filterabschnitts 21 bzw. der der Anschlussvorrichtung 18 zugeordneten Filterkerze 22 zum kleinsten bzw. dem an die Abreinigungsvorrichtung 20 angrenzenden Innenquerschnitt Q2 der Anschlussvorrichtung 18 eine - insbesondere dimensionslose - Kennzahl K.

Die Kennzahl K ist vorzugsweise über folgende Formel berechenbar bzw. ausdrückbar:

$$K = A_{Filter} / Q = d_{Filter} * L_{Filter} * 4 / d_Q^2,$$

vorzugsweise wobei in der Formel von einem zumindest im Wesentlichen zylindrischen Filterabschnitt 21 ausgegangen wird, und/oder wobei $A_{Filter}$ die Oberfläche des der Anschlussvorrichtung 18 zugeordneten Filterabschnitts 21 bzw. der der Anschlussvorrichtung 18 zugeordneten Filterkerze 22, Q der kleinste Innenquerschnitt Q2, $d_{Filter}$ der Innen- oder Außendurchmesser des Filterabschnitts 21 bzw. der Filterkerze 22, $L_{Filter}$ die Länge oder Höhe des Filterabschnitts 21 bzw. der Filterkerze 22 und $d_Q$ der Durchmesser bzw. die Breite des kleinsten bzw. des an die Abreinigungsvorrichtung 20 angrenzenden Innenquerschnitts Q2 ist. Für abweichende Filtergeometrien kann die Kernzahl K entsprechend berechnet werden.

Vorzugsweise ist das Verhältnis der Oberfläche des der Anschlussvorrichtung 18 zugeordneten Filterabschnitts 21 bzw. der der Anschlussvorrichtung 18 zugeordneten Filterkerze 22 zum kleinsten bzw. der an die Abreinigungsvorrichtung 20 angrenzenden Innenquerschnitt Q2 der Anschlussvorrichtung 18 bzw. die Kennzahl K größer als 200, insbesondere größer als 250, und/oder kleiner als 3000, insbesondere kleiner als 2500.

Der Innenquerschnitt Q ist vorzugsweise eine (maximale) Innenquerschnittsfläche senkrecht zur Längsachse L der Anschlussvorrichtung 18 oder ein hydraulischer Querschnitt bzw. eine hydraulische Querschnittsfläche. Insbesondere ist der Innenquerschnitt Q die von der Seitenwand 33 der Anschlussvorrichtung 18 begrenzte bzw. eingeschlossene Fläche.

Die Anschlussvorrichtung 18 weist an mindestens einem axialen Ende bzw. im Öffnungs- oder Mündungsbereich mindestens eine Verbindungseinrichtung, insbesondere einen Flanschstutzen 38 und/oder Klemmstutzen 39, auf, wobei die Verbindungseinrichtung dazu ausgebildet ist, die Anschlussvorrichtung 18 mit dem Filter 19 und/oder der Abreinigungsvorrichtung 20, dem Ventil 31 und/oder der Speichereinrichtung 28 form-, kraft- und/oder stoffschlüssig zu verbinden.

Die Anschlussvorrichtung 18, insbesondere die Verbindungseinrichtung(en) der Anschlussvorrichtung 18, ist/sind dazu ausgebildet, die Anschlussvorrichtung 18 mit dem Filter 19, die Anschlussvorrichtung 18 mit der Abreinigungsvorrichtung 20, und/oder den Filter 19 mit der Abreinigungsvorrichtung 20, insbesondere unbeweglich, haltend, abstützend und/oder starr, zu verbinden.

Die Anschlussvorrichtung 18 weist an beiden axialen Enden jeweils eine Verbindungseinrichtung auf, wie in Fig. 2 dargestellt.

Die Verbindungseinrichtung(en) ist/sind vorzugsweise als Flansch, Klemmverbindung und/oder Rohrverschraubung ausgebildet und/oder an gegenüberliegenden axialen Enden der Anschlussvorrichtung 18 angeordnet, insbesondere einstückig hiermit gebildet.

Bei der in Fig. 2 dargestellten Ausführungsform weist die Anschlussvorrichtung 18 - vorzugsweise am axialen Ende des zweiten Abschnitts 36 - einen Flanschstutzen 38 und - vorzugsweise am axialen Ende des dritten Abschnitts 37 - einen Klemmstutzen 39 auf. Es sind jedoch auch andere konstruktive Lösungen möglich, insbesondere bei denen beiden axialen Enden der Anschlussvorrichtung 18 einen Flanschstutzen 38 oder Klemmstutzen 39 als Verbindungseinrichtung aufweisen.

Die Verbindungseinrichtung oder Verbindungseinrichtungen kann/können sowohl als Nutstutzen oder Bundstutzen ausgebildet sein. Bei der dargestellten Ausführungsform ist der Flanschstutzen 38 vorzugsweise als Bundstutzen und der Klemmstutzen 39 vorzugsweise als Nutstutzen ausgebildet.

Vorzugsweise weist die Verbindungseinrichtung eine Nut 40 auf, vorzugsweise wobei die Nut 40 dazu ausgebildet ist, eine Dichtung 41 aufzunehmen.

Der Außendurchmesser der Verbindungseinrichtung ist vorzugsweise größer als der Außendurchmesser des angrenzenden Abschnitts der Anschlussvorrichtung 18. Insbesondere ist der Außendurchmesser des Flanschstutzens 38 größer als der maximale oder angrenzende Außendurchmesser des zweiten Abschnitts 36 und/oder der Außendurchmesser des Klemmstutzens 39 größer als der maximale oder angrenzende Außendurchmesser des ersten Abschnitts 35 und/oder des dritten Abschnitts 37.

Wie in Fig. 2 dargestellt, ist der Innenquerschnitt Q der Anschlussvorrichtung 18 zumindest im Wesentlichen kreisförmig ausgebildet. Es sind jedoch auch andere konstruktive Lösungen möglich, insbesondere bei denen der Innenquerschnitt Q zumindest im Wesentlichen oval, rechteckig oder quadratisch ausgebildet ist.

Die Anschlussvorrichtung 18 und/oder die Seitenwand 33 begrenzt vorzugsweise den Innenquerschnitt Q mit einer Innenseite 42 der Seitenwand 33.

Vorzugsweise verläuft die Innenseite 42 entlang der Längsachse L - zumindest im ersten Abschnitt 35 und/oder im zweiten Abschnitt 36 - konisch und/oder weist eine zumindest im Wesentlichen gradlinige Kontur auf. Alternativ oder zusätzlich ist die Innenseite 42 glockenartig, glockenförmig oder in der Form eines divergierenden Lavaldüsenabschnitts geformt. Vorzugsweise ist die Innenseite 42 der Seitenwand 33 zumindest im Wesentlichen konkav und/oder konvex ausgebildet.

Bei der dargestellten Ausführungsform nimmt der Innenquerschnitt bzw. die Steigung des Innenquerschnitts Q bzw. der Innenseite 42 entlang der Längsachse L oder ein zwischen der Längsachse L und einer Tangente der Seitenwand 33 eingeschlossener Winkel ab. Insbesondere weist der erste Abschnitt 35 einen entlang der Längsachse L stärker zunehmenden Innenquerschnitt Q auf als der zweite Abschnitt 36.

Vorzugsweise weist die Anschlussvorrichtung 18, insbesondere die Seitenwand 33, eine Außenseite 43 auf, vorzugsweise wobei der Verlauf bzw. die Kontur der Außenseite 43 unabhängig von der Innenseite 42 ausgebildet sein kann.

Vorzugsweise weist die Außenseite 43 einen entlang der Längsachse L zunehmenden Außenquerschnitt A auf. Bei der dargestellten Ausführungsform verläuft die Außenseite 43 entlang der Längsachse L zumindest im Wesentlichen parallel zur Innenseite 42. Es sind jedoch auch andere Lösungen möglich.

Insbesondere ist die Außenseite 43 - zumindest im ersten Abschnitt 35 und/oder zweiten Abschnitt 36 - zumindest im Wesentlichen gradlinig und/oder weist die Außenseite 43 eine zumindest im Wesentlichen konische oder in Längsrichtung gewölbte oder glockenartige Kontur auf. Hier sind jedoch auch andere konstruktive Lösungen möglich.

Fig. 3 zeigt einen schematischen Schnitt der Anschlussvorrichtung 18 zusammen mit dem Ventil 31 im geschlossenen Zustand und mit einem Teil eines der Filterabschnitte 21.

Der Übergang zwischen dem ersten Abschnitt 35 und zweiten Abschnitt 36 und/oder zwischen dem zweiten Abschnitt 36 und dritten Abschnitt 37 ist/sind vorzugsweise zumindest im Wesentlichen stetig. Besonders bevorzugt ist die Innenseite 42 zumindest im ersten Abschnitt 36 und/oder im zweiten Abschnitt 37 stufenlos ausgebildet.

Bei der dargestellten Ausführungsform ist die Außenseite 43 - zumindest im ersten Abschnitt 35 sowie im zweiten Abschnitt 36 - gradlinig und/oder konisch ausgebildet. Es sind jedoch auch andere konstruktive Lösungen möglich.

Vorzugsweise nimmt die Stärke der Seitenwand 33 und/oder die Differenz zwischen dem Innenquerschnitt Q und dem Außenquerschnitt A entlang der Längsachse L und/oder mit zunehmenden Innenquerschnitt Q zu.

Insbesondere nimmt der Innenquerschnitt Q entlang der Längsachse L mit einem ersten Winkel W1 zu, der größer als 5 ° und/oder kleiner als 20 °, vorzugsweise zumindest im Wesentlichen gleich 12 °, ist, insbesondere wobei eine gedachte Verlängerung oder Tangente der Innenseite 42 mit der Längsachse L den ersten Winkel W1 einschließt.

Wie in Fig. 3 dargestellt, verlaufen die Hauptachsen H der Öffnungen 34 schräg zur Seitenwand 33, insbesondere zur Innenseite 42 der Seitenwand 33. Zur Veranschaulichung ist in Fig. 3 lediglich die Hauptachse H einer Öffnung 34 dargestellt. Die folgenden Erläuterungen gelten jedoch vorzugsweise für die Hauptachsen H der anderen Öffnungen 34 entsprechend.

Vorzugsweise weisen die Hauptachsen H von außen nach innen jeweils in Richtung eines Innenquerschnitts Q, der größer ist als ein Innenquerschnitt Q, in den die jeweilige Öffnung 34 mündet.

Besonders bevorzugt weisen die Hauptachsen H von außen nach innen in Richtung des größten Innenquerschnitts Q1 und/oder schneiden eine durch den größten Innenquerschnitts Q1 gedachte Ebene. Insbesondere weisen die Hauptachsen H von außen nach innen in Richtung des Filters 19, wie in Fig. 3 dargestellt.

Besonders bevorzugt schneiden die Hauptachsen H der Öffnungen 34 die Längsachse L in einem zweiten Winkel W2 und/oder schließen die Hauptachsen H mit der Längsachse L in einer Längsschnittansicht der Anschlussvorrichtung 18 - wie in Fig. 3 dargestellt - einen zweiten Winkel W2 ein, vorzugsweise wobei der zweite Winkel W2 kleiner als 90°, vorzugsweise zumindest im Wesentlichen gleich 45 °, groß ist.

Vorzugsweise schließt die Innenseite 42 mit der Hauptachse H, insbesondere im Bereich der jeweiligen Mündung der Öffnung 34, einen dritten Winkel W3 ein, insbesondere wobei der dritte Winkel W3 kleiner als 90° und/oder größer als der erste Winkel W1 und/oder der zweite Winkel W2 ist.

Die Öffnungen 34 sind vorzugsweise in einer oder mehreren Ebenen E orientiert und/oder angeordnet, insbesondere wobei die Ebenen E zumindest im Wesentlichen orthogonal zur Längsachse L der Anschlussvorrichtung 18 ausgerichtet sind, wie Fig. 3 anhand zweier Ebenen E veranschaulicht.

Vorzugsweise sind die Ebenen E jeweils durch mindestens drei Öffnungen 34 definiert. Insbesondere liegen und/oder münden mindestens drei Öffnungen 34 in einer der Ebenen E.

Besonders bevorzugt ist jede Öffnung 34 einer der Ebenen E zuordenbar oder zugeordnet.

Wie in Fig. 3 dargestellt, sind die Ebenen E entlang der Längsachse L - vorzugsweise zumindest im Wesentlichen äquidistant - zueinander versetzt und/oder parallel zueinander angeordnet. Es sind jedoch auch andere konstruktive Lösungen oder Anordnungen möglich.

Die Anzahl der Öffnungen 34 je Ebene E nimmt vorzugsweise mit zunehmenden Innenquerschnitt Q entlang der Längsachse L zu.

Besonders bevorzugt bleibt das Verhältnis aller Querschnitte der Öffnungen 34 einer Ebene E zu demjenigen Innenquerschnitt Q, in den die Öffnungen 34 der Ebene E münden, zumindest im Wesentlichen entlang der Längsachse L konstant.

Die Öffnungen 34 sind - zumindest entlang des Innenquerschnitts Q, in den die jeweiligen Öffnungen 34 münden, und/oder in einer Ebene E - zumindest im Wesentlichen kreisförmig angeordnet und/oder bilden entlang der Längsachse L mehrere konzentrische Kreise.

In einer nicht dargestellten Alternative sind die Öffnungen 34 alternativ oder zusätzlich gitterartig angeordnet oder bilden eine gitterartige Struktur.

Vorzugsweise weisen die Hauptachsen H der Öffnungen 34 einer der Ebenen E einen gemeinsamen Schnittpunkt auf, insbesondere wobei der Schnittpunkt auf der Längsachse L liegt.

Die Öffnungen 34 sind vorzugsweise entlang der Längsachse L - zumindest im ersten Abschnitt 35 - und/oder über den jeweiligen Innenquerschnitt Q gleichmäßig verteilt angeordnet. Vorzugsweise sind die Öffnungen 34 in der jeweiligen Ebene E zueinander äquidistant versetzt und/oder rotationssymmetrisch zueinander angeordnet.

Bei der in Fig. 3 dargestellten Ausführungsform sind die Öffnungen 34 als Bohrung ausgebildet und/oder weisen einen Kreisquerschnitt auf. Es sind jedoch auch andere Geometrien möglich, insbesondere wobei die Öffnungen 34 einen eckigen, insbesondere rechteckigen, Querschnitt aufweisen und/oder als Langloch, zylindrisch, rotationssymmetrisch und/oder achsensymmetrisch zur jeweiligen Hauptachse H ausgebildet sind.

Vorzugsweise weisen die Öffnungen 34 einen Durchmesser und/oder eine Breite auf, der bzw. die mehr als 2 % und/oder weniger als 20 %, vorzugsweise zumindest im Wesentlichen gleich 10 %, des Durchmesser und/oder der Breite des größten Innenquerschnitts Q1 beträgt.

Bei der dargestellten Ausführungsform weisen die Öffnungen 34 zumindest im Wesentlichen jeweils den gleichen Durchmesser und/oder die gleiche Breite auf. Es sind jedoch auch andere konstruktive Lösungen möglich, insbesondere bei denen der Durchmesser und/oder die Breite der Öffnungen 34 je und/oder in einer Ebene E und/oder entlang der Längsachse L variiert.

Vorzugsweise weisen die Öffnungen 34 einen Durchmesser und/oder eine Breite von mindestens 5 mm und/oder höchstens 40 mm, insbesondere von zumindest im Wesentlichen 20 mm, auf.

Der Mündungsquerschnitt bzw. die Querschnittsfläche aller Öffnungen 34 beträgt zusammen bzw. kumuliert vorzugsweise mehr als 2 % oder 5 %, insbesondere mehr als 8 % oder 10 %, besonders bevorzugt mehr als 12 %, und/oder weniger als 50 % oder 40 %, insbesondere weniger als 30 % oder 20 %, ganz besonders bevorzugt weniger als 15 %, der Fläche der Innenseite 42 und/oder Außenseite 43.

Die Öffnungen 34 sind vorzugsweise länglich und/oder rohrartig ausgebildet, vorzugsweise mit einer Länge, die größer als der Durchmesser und/oder die Breite der Öffnungen 34 ist.

Vorzugsweise verjüngt sich der Innenquerschnitt Q in Richtung der Abreinigungsvorrichtung 20 und/oder des Ventils 31 und/oder nimmt in Richtung des Filters 19 und/oder der Filterabschnitte 21 zu.

Die vorschlagsgemäße Abreinigungsvorrichtung 20 weist die Anschlussvorrichtung 18 auf und/oder ist mit dieser verbunden. Insbesondere ist das Ventil 31, das vorzugsweise der Abreinigungsvorrichtung 20 zugeordnet und/oder integraler Bestandteil der Abreinigungsvorrichtung 20 ist, mit der Anschlussvorrichtung 18 fluidisch verbunden, wie in Fig. 3 dargestellt.

Das Ventil 31 ist vorzugsweise als Axialventil ausgebildet, wie beispielhaft in Fig. 3 dargestellt. Es sind jedoch auch andere konstruktive Lösungen möglich.

Das Ventil 31 ist vorzugsweise pneumatisch, hydraulisch und/oder elektrisch angetrieben oder antreibbar. Bei der dargestellten Ausführungsform ist das Ventil 31 vorzugsweise pneumatisch, insbesondere mittels Druckluft der Speichereinrichtung 28 (nicht dargestellt), angetrieben.

Das Ventil 31 weist vorzugsweise einen Kolben 44 auf, vorzugsweise wobei der Kolben 44 axial und/oder in Richtung der Längsachse L bewegbar ist.

In Fig. 3 befindet sich das Ventil 31 im geschlossenen Zustand.

Im geschlossenen Zustand lagert oder liegt der Kolben 44 derart auf einem im Ventil 31 angeordneten Kegelsitz 45, das eine Durchströmung des Ventils 31 verhindert wird.

Vorzugsweise ist der Kolben 44 mittels einer Feder 46 oder eines sonstigen Spannelements vorgespannt. Zur Öffnung des Ventils 31 weist das Ventil 31 vorzugsweise eine Ventilkammer 47 auf. Insbesondere ist der Druck eines Mediums in der Ventilkammer 47 mittels der Steuereinrichtung 29 (nicht dargestellt) geregelt oder regelbar bzw. gesteuert oder steuerbar.

Vorzugsweise öffnet sich das Ventil 31, wenn der Druck in der Ventilkammer 47 größer ist als der durch die Feder 46 erzeugte Druck.

Der in Fig. 3 dargestellte Filter 19 bzw. einer der Filterabschnitte 21 des Filters 19 weist vorzugsweise ein Verteilerrohr 48 mit mehreren Bohrungen 49 auf. Das Verteilerrohr 48 ist insbesondere durch ein Filtergewebe 50 ummantelt.

Das Filtergewebe 50 ist vorzugsweise dazu ausgebildet, Partikel einer bestimmten Größe, insbesondere den eingangs beschriebenen Suspensionsstaub, zurückzuhalten bzw. zu filtrieren.

Vorzugsweise bildet sich während der und/oder durch die Filtration, wie in Fig. 3 angedeutet, der Filterkuchen 32 auf dem Verteilerrohr 48 und/oder dem Filtergewebe 50.

Die in Fig. 3 dargestellten Pfeile veranschaulichen schematisch die bevorzugte Strömungsrichtung im Filter 19 und in der Anschlussvorrichtung 18 während der Filtration mittels des Filters 19. Die Pfeile veranschaulichen lediglich schematisch die Strömungsrichtung; etwaige Turbulenzen, Wirbel, Ablösungen oder andere Strömungsphänomene bleiben dabei unberücksichtigt.

Bei der Filtration mittels des Filters 19 durchströmt das zu reinigende Medium, insbesondere das Rohgas 23, den Filterabschnitt 21 zumindest im Wesentlichen von außen nach innen bzw. in radialer Richtung zur Längsachse L.

Die Anschlussvorrichtung 18 wird bei der Filtration mittels des Filters 19 im zweiten Abschnitt 36 vorzugsweise zumindest im Wesentlichen axial bzw. entlang der Längsachse L durchströmt.

Anschließend bzw. stromabwärts wird die Strömung im ersten Abschnitt 35 bei der Filtration derart umgeleitet, dass sie von innen nach außen durch die Öffnungen 34 strömt.

Die Anschlussvorrichtung 18 und/oder die Öffnungen 34 wird bzw. werden vorzugsweise zumindest im Wesentlichen von innen nach außen bei der Filtration durchströmt und/oder ist bzw. sind dazu ausgebildet, bei der Filtration von innen nach außen durchströmt zu werden.

Insbesondere ist das vorschlagsgemäße Filtersystem 17 dazu ausgebildet, ein Medium, vorzugsweise das Reingas 26, von innen bzw. einer dem Filter 19 zugewandten Seite nach außen bzw. auf eine dem Filter 19 abgewandte Seite durch die Öffnungen 34 zu leiten.

Die Anschlussvorrichtung 18 ist insbesondere dazu ausgebildet, während der Filtration ein Medium, insbesondere das Reingas 26, zu beschleunigen. Besonders bevorzugt wirkt die Anschlussvorrichtung 18 bei der Filtration als Düse bzw. Konfuser.

Fig. 4 zeigt einen schematischen Schnitt der Anschlussvorrichtung 18 sowie des ausschnittsweise dargestellten Filters 19 bzw. eines der Filterabschnitte 21 gemäß Fig. 3 zusammen mit dem Ventil 31 im geöffneten Zustand.

Vorzugsweise ist bzw. sind die Anlage 1, die Abreinigungsvorrichtung 20 und/oder die Steuereinrichtung 29 (vgl. Fig. 1) dazu ausgebildet, die Strömungsrichtung durch die Anschlussvorrichtung 18, insbesondere durch die Öffnungen 34, und/oder durch den Filter 19, insbesondere durch einen der Filterabschnitte 21, zumindest im Wesentlichen umzukehren, vorzugsweise mittels Öffnen bzw. Schlie-ßen des Ventils 31.

Fig. 4 zeigt die Abreinigung eines der Filterabschnitte 21 bzw. die partielle Abreinigung des Filters 19.

Die Anschlussvorrichtung 18 und/oder die Abreinigungsvorrichtung 20 ist bzw. sind vorzugsweise dazu ausgebildet, bei und/oder zur Abreinigung ein Medium, insbesondere Druckluft aus der Speichereinrichtung 28 (vgl. Fig. 1), - insbesondere in Richtung des zunehmenden Innenquerschnitts Q - zu verzögern und/oder den statischen Druck des Mediums, insbesondere der Druckluft der Speichereinrichtung 28, - zumindest in der Anschlussvorrichtung 18 - zu erhöhen.

Vorzugsweise sind die Öffnungen 34 dazu ausgebildet, bei und/oder zur Abreinigung ein weiteres Medium, insbesondere das Reingas 26, von außen nach innen zu leiten bzw. zu saugen. Insbesondere ist bzw. sind die Anschlussvorrichtung 18 und/oder die Abreinigungsvorrichtung 20 dazu ausgebildet, den Massenstrom eines Mediums, vorzugsweise der Druckluft der Speichereinrichtung 28, zu erhöhen und/oder ein zweites Medium, vorzugsweise das Reingas 26, - insbesondere durch die und/oder mittels der Öffnungen 34 - anzusaugen.

Die Anschlussvorrichtung 18 wirkt vorzugsweise bei und/oder zur Abreinigung als Diffusor.

Besonders bevorzugt hängt die Wirkung der Anschlussvorrichtung 18 von der Strömungsrichtung durch die Anschlussvorrichtung 18 ab.

Besonders bevorzugt wird die Anschlussvorrichtung 18 und/oder der Filter 19, insbesondere einer der Filterabschnitte 21, bei und/oder zur Abreinigung in einer Richtung durchströmt, die vorzugsweise zumindest im Wesentlichen der Strömungsrichtung entgegengesetzt ist, die bei und/oder zur Filtration mittels des Filters 19 vorliegt.

Bei einer besonders bevorzugten Ausführungsform der Anschlussvorrichtung 18 ist die Anschlussvorrichtung 18 als überkritischer Diffusor ausgebildet und/oder nimmt der Innenquerschnitt Q entlang der Längsachse L mit einem ersten Winkel W1 größer gleich 8 ° zu.

Die Öffnungen 34 sind insbesondere dazu ausgebildet, - zumindest bei und/oder zur Abreinigung - eine Strömungsablösung, insbesondere an und/oder auf der Innenseite 42 der Anschlussvorrichtung 18, zu verhindern und/oder zu reduzieren. Besonders bevorzugt liegt in der Anschlussvorrichtung 18 - zumindest bei der Abreinigung - eine zumindest im Wesentlichen laminare Strömung vor und/oder ist die Anschlussvorrichtung 18 dazu ausgebildet, eine laminare Strömung zu ermöglichen oder die Bildung einer laminaren Strömung zu unterstützen.

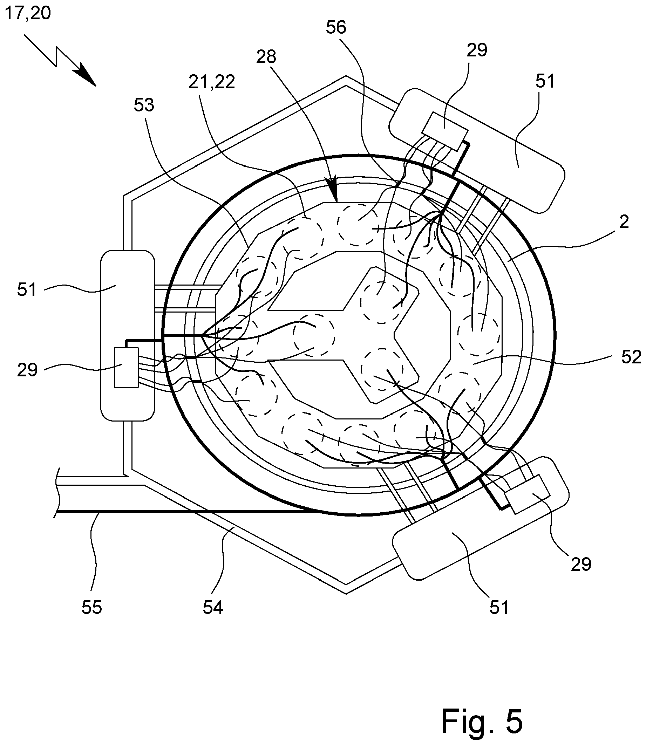

Fig. 5 zeigt eine schematische Draufsicht des vorschlagsgemäßen Filtersystems 17 sowie der vorschlagsgemäßen Abreinigungsvorrichtung 20 mit der Speichereinrichtung 28 sowie einer oder mehrerer, insbesondere synchronisierte, der Steuereinrichtungen 29, die vorzugsweise zur Steuerung der Ventile 31 und/oder zur Messung eines oder mehrerer den Filterabschnitten 21 zugeordneter Differenzdrücke DP ausgebildet sind.

Die Speichereinrichtung 28 ist vorzugsweise dazu ausgebildet, die Abreinigungsvorrichtung 20 mit einem Medium, insbesondere Druckluft, zu versorgen. Besonders bevorzugt ist die Speichereinrichtung 28 dem Filtersystem 17 und/oder der Abreinigungsvorrichtung 20 zugeordnet und/oder Bestandteil des Filtersystems 17 und/oder der Abreinigungsvorrichtung 20.

Vorzugsweise weist das Anlagengehäuse 2 zumindest teilweise im Inneren die Speichereinrichtung 28 auf bzw. ist die Speichereinrichtung 28 zumindest im Wesentlichen innerhalb bzw. im Inneren des Anlagengehäuses 2 angeordnet. Bei der in Fig. 5 dargestellten Ausführungsform ist die Speichereinrichtung 28 sowohl im Inneren des Anlagegehäuses 2 als auch außerhalb des Anlagengehäuses 2 ausgebildet.

Vorzugsweise weist die Speichereinrichtung 28 optional, wie in Fig. 5 dargestellt, eine oder mehrere Speichereinheiten 51 auf, vorzugsweise wobei die Speichereinheiten 51 außerhalb des Anlagengehäuses 2 angeordnet sind.

Die Speichereinrichtung 28 kann von außen mit Medium oder Druckluft versorgbar sein, insbesondere durch Fluidverbindungen zwischen der/den Speichereinheit(en) 51 und/oder einem Kompressor und dem durch die Speichereinrichtung 28 gebildeten oder umschlossenen Innenraum. Es ist jedoch auch auf sonstige Weise möglich, der Speichereinrichtung 28 Druckluft oder ein Medium zuzuführen.

Die Speichereinrichtung 28 weist insbesondere einen Ringspeicher 52 auf, der im Inneren des Anlagengehäuses 2 angeordnet ist.

Vorzugsweise ist die Speichereinrichtung 28 und/oder der Ringspeicher 52 zumindest im Wesentlichen als Ring oder ringförmig ausgebildet.

Bei der dargestellten Ausführungsform erstreckt sich die Speichereinrichtung 28 und/oder der Ringspeicher 52 im oberen Bereich des Anlagengehäuses 2, insbesondere im Dombereich 8, und/oder oberhalb des Filtersystems 17 bzw. des Filters 19. Es sind jedoch auch andere konstruktive Lösungen oder Anordnungen möglich.

Vorzugsweise ist die Speichereinrichtung 28 als Gasspeicher, insbesondere als Speicher für Druckluft, und/oder als Leitungsnetz, insbesondere als Gasleitungsnetz, besonders bevorzugt als Druckluftleitungsnetz, ausgebildet. Besonders bevorzugt ist die Speichereinrichtung 28 dazu ausgebildet, ein Medium, insbesondere Druckluft, gleichmäßig an die Ventile 31 und/oder an das Filtersystem 17 zu verteilen und/oder abzugeben.

Insbesondere ist die Speichereinrichtung 28 dazu ausgebildet, mehrere Filterabschnitte 21 des Filters 19 mit einem Medium, insbesondere Druckluft, jeweils einzeln und/oder zeitlich beabstandet zu versorgen.

Vorzugsweise weist die Speichereinrichtung 28, insbesondere der Ringspeicher 52, mindestens zwei Rohrsegmente 53 auf und/oder ist aus mehreren Rohrsegmenten 53 ausgebildet.

Die Rohrsegmente 53 sind vorzugsweise form-, kraft- und/oder stoffschlüssig, insbesondere durch Verschweißen, miteinander verbunden oder einstückig gebildet.

Der Druck des Mediums in der Speichereinrichtung 28 beträgt vorzugsweise mehr als 1 bar, insbesondere mehr als 2 bar, und/oder weniger als 10 bar, insbesondere weniger als 8 bar, besonders bevorzugt weniger als 4 bar. Das Volumen der Speichereinrichtung beträgt vorzugsweise mehr als 50 l, insbesondere mehr als 100 l, besonders bevorzugt mehr als 200 l, und/oder weniger als 1000 l, insbesondere weniger als 800 l, besonders bevorzugt weniger als 500 l. Dies hat sich als vorteilhaft in Zusammenhang mit einer kompakten Bauform und guter Abreinigungsleistung gezeigt.

Vorzugsweise ist die Speichereinrichtung 28, insbesondere der Ringspeicher 52, fluidisch mit dem Ventil 31 und/oder der Anschlussvorrichtung 18 verbunden.

Ganz besonders bevorzugt ist das Ventil 31 im Inneren des Anlagengehäuses 2, insbesondere innerhalb der Speichereinrichtung 28 und/oder zwischen der Speichereinrichtung 28 und der Anschlussvorrichtung 18, angeordnet. Insbesondere ist die Speichereinrichtung 28, vorzugsweise der Ringspeicher 52, dazu ausgebildet, das Ventil 31 vor einer explosionsfähigen Atmosphäre zu schützen und/oder den direkten Kontakt des Ventils 31 mit einer explosionsfähigen Atmosphäre, insbesondere des Anlagengehäuses 2 und/oder des Dombereichs 8, zu verhindern.

Vorzugsweise weist bzw. weisen das Anlagengehäuse 2, die Abreinigungsvorrichtung 20 und/oder die Speichereinrichtung 28 mehrere Leitungen zur Versorgung der Abreinigungsvorrichtung 20, der Speichereinrichtung 28, insbesondere des Ringspeichers 52, und/oder des Ventils 31 mit einem Medium, insbesondere Druckluft, auf. Bei der in Fig. 5 dargestellten Ausführungsform wird die Speichereinrichtung 28 vorzugsweise mittels einer Druckluftleitung 54 und/oder das Ventil 31 mittels einer Steuerluftleitung 55 versorgt.

Die Steuerluftleitung 55 ist vorzugsweise dazu ausgebildet, das Ventil 31 wahlweise zu öffnen oder zu schließen. Besonders bevorzugt steuert oder regelt die Steuereinrichtung 29 das Ventil 31 mittels der Steuerluftleitung 55. Ganz besonders bevorzugt ist der Druck in der Steuerluftleitung 55 größer als der Druck in der Druckluftleitung 54.

Das Anlagengehäuse 2 weist vorzugsweise mehrere Durchführungen 56 auf, insbesondere wobei die Druckluftleitung 54 und/oder die Steuerluftleitung 55 durch die Durchführung 56 von außen nach innen in das Anlagengehäuse 2 geführt sind.

Besonders bevorzugt ist die Steuereinrichtung 29 dazu ausgebildet, das Ventil 31 zur Abreinigung des Filters 19, insbesondere eines der Filterabschnitte 21, zu steuern.

Bei der in Fig. 5 dargestellten Ausführungsform weist bzw. weisen die Anlage 1, das Filtersystem 17 und/oder die Abreinigungsvorrichtung 20 vorzugsweise mehrere Steuereinrichtungen 29 auf, vorzugsweise wobei jeweils eine Steuereinrichtung 29 mindestens zwei Ventile 31 steuert oder regelt.

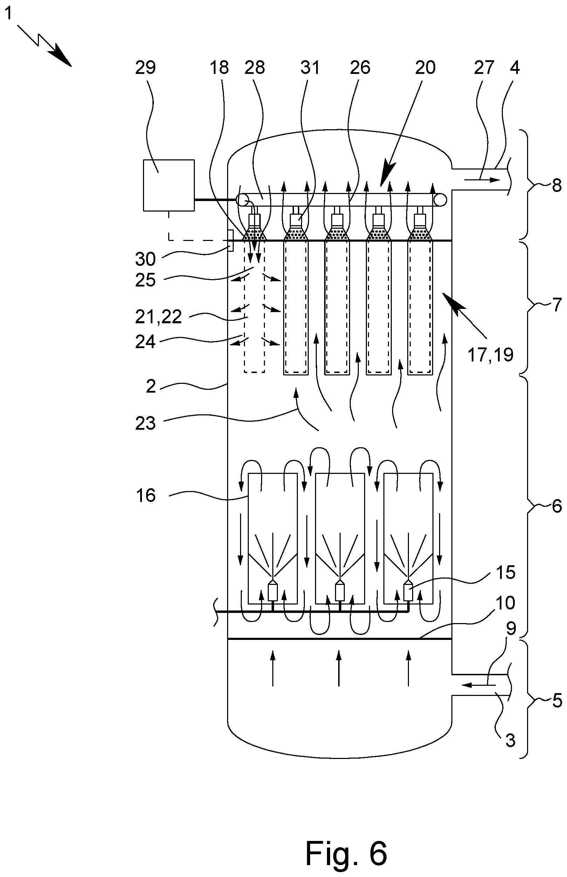

Im Folgenden wird das bevorzugte Abreinigungsverfahren zur abschnittsweisen Abreinigung des Filters 19 anhand der Fig. 6 bis 10 im Detail erläutert.

Das Abreinigungsverfahren wird vorzugsweise mittels der Anlage 1, des Filtersystems 17, der Anschlussvorrichtung 18, der Abreinigungsvorrichtung 20 und/oder der Steuereinrichtung 29 durchgeführt.

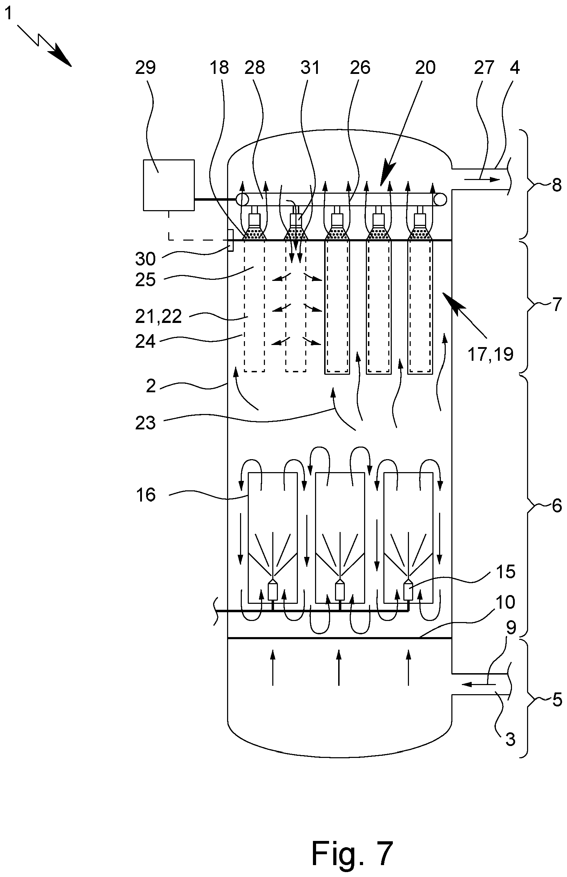

Fig. 6 und 7 zeigen die Anlage 1, das Filtersystem 17, die Anschlussvorrichtung 18, die Abreinigungsvorrichtung 20 sowie die Steuereinrichtung 29 bei der Durchführung des bevorzugten Abreinigungsverfahrens.

Beim Abreinigungsverfahren wird das Filtersystem 17 bzw. der Filter 19 abschnittsweise bzw. partiell abgereinigt.

Vorzugsweise weist das Filtersystem 17 bzw. der Filter 19 mindestens zwei, vorzugsweise mindestens drei, insbesondere mindestens vier, Filterabschnitte 21, insbesondere Filterkerzen 22, auf, wobei mittels eines Abreinigungsvorgangs 57 jeweils einer der Filterabschnitte 21 bzw. eine der Filterkerzen 22 abgereinigt wird, wie in Fig. 6 und 7 dargestellt.

Vorzugsweise werden im bevorzugten Abreinigungsverfahren die Filterabschnitte 21 in zueinander zeitlich beabstandeten bzw. versetzten Abreinigungsvorgängen 57 abgereinigt. Insbesondere werden die Filterabschnitte 21 in zueinander um ein Zeitintervall T1 beabstandeten Abreinigungsvorgängen 57 abgereinigt.

Vorzugsweise wird im Abreinigungsverfahren ein Abreinigungsvorgang 57 vollständig abgeschlossen bzw. beendet bevor ein weiterer Abreinigungsvorgang 57 startet.

Besonders bevorzugt werden alle Filterabschnitte 21 bzw. Filterkerzen 22 des Filters 19 und/oder der gesamte Filter 19 innerhalb eines Abreinigungszyklus 58 abgereinigt.

Insbesondere weist das Abreinigungsverfahren mindestens zwei Abreinigungszyklen 58 auf.

Vorzugsweise ist das Ende eines Abreinigungszyklus 58 zeitlich um ein Zeitintervall T2 zum Anfang eines darauf folgenden Abreinigungszyklus 58 beabstandet.

Vorzugsweise handelt es sich bei einem auf einen (ersten) Abreinigungszyklus 58 folgenden (zweiten) Abreinigungszyklus 58 um denjenigen (zweiten) Abreinigungszyklus 58, der unmittelbar auf den (ersten) Abreinigungszyklus 58 folgt, insbesondere wobei zwischen dem Ende des (ersten) Abreinigungszyklus 58 und dem Anfang des (zweiten) Abreinigungszyklus 58 bzw. während des Zeitintervalls T1 und/oder T2 kein Abreinigungsvorgang 57 ausgelöst oder durchgeführt wird.

Wie in Fig. 6 und 7 dargestellt, weist das Filtersystem 17 bzw. der Filter 19 besonders bevorzugt mindestens drei Filterabschnitte 21 auf, wobei die Filterabschnitte 21 in zueinander um Zeitintervalle T1 beabstandeten Abreinigungsvorgängen 57 abgereinigt werden.

Vorzugsweise wird ein Abreinigungsvorgang 57 und/oder ein Abreinigungszyklus 58 durch Öffnen des zugeordneten Ventils 31 ausgelöst, vorzugsweise wobei jeweils einem Filterabschnitt 21 bzw. einer Filterkerze 22 ein Ventil 31 zugeordnet ist bzw. jeweils ein Filterabschnitt 21 durch Öffnen des korrespondierenden Ventils 31 abreinigbar ist.

Insbesondere wird, wie eingangs bereits erläutert, durch Auslösen eines Abreinigungsvorgangs 57 die Strömungsrichtung des betroffenen Filterabschnitts 21 bzw. der betroffenen Filterkerze 22 umgekehrt.

Wie in Fig. 6 und 7 dargestellt, wird vorzugsweise die Filtration während der Abreinigung eines der Filterabschnitte 21 mittels der anderen Filterabschnitte 21 fortgesetzt. Es sind jedoch auch andere Verfahrensvarianten möglich, insbesondere bei denen die Filtration während des Abreinigungsvorgangs 57 ausgesetzt bzw. eingestellt wird.

In Fig. 6 ist die Abreinigung eines ersten Filterabschnitts 21 bzw. einer ersten Filterkerze 22 dargestellt, insbesondere wobei Druckluft aus der Speichereinrichtung 28 durch das zugeordnete Ventil 31 und die vorschlagsgemäße Anschlussvorrichtung 18 in den Filterabschnitt 21 bzw. die Filterkerze 22 geleitet wird, insbesondere indem das Ventil 31 geöffnet wird.

Vorzugsweise wird während des Abreinigungsvorgangs 57 zusätzlich zur Druckluft aus der Speichereinrichtung 28 ein weiteres Medium, insbesondere das Reingas 26, in den Filterabschnitt 21 bzw. die Filterkerze 22 geleitet, wie in Fig. 6 und Fig. 7 durch Pfeile angedeutet.

Fig. 7 zeigt den Abreinigungsvorgang 57 eines weiteren, zweiten Filterabschnitts 21 bzw. einer weiteren Filterkerze 22.

Vorzugsweise werden im bevorzugten Abreinigungsverfahren jeweils zueinander benachbarte Filterabschnitte 21 in zueinander zeitlich versetzten Abreinigungsvorgängen 57 abgereinigt, wie mittels Fig. 6 und 7 dargestellt. Besonders bevorzugt bleibt die Reihenfolge, in der die Filterabschnitte 21 abgereinigt werden, in jedem Abreinigungszyklus 58 identisch. Es sind jedoch auch andere Verfahrensvarianten möglich, insbesondere bei denen die Reihenfolge, in der die Filterabschnitte 21 abgereinigt werden, mit jedem Abreinigungszyklus 58 variiert wird.

Bei einer ganz besonders bevorzugten Verfahrensvariante werden in einem Abreinigungszyklus 58 zuerst diejenigen Filterabschnitte 21 abgereinigt, die den größten Abstand zur Druckluftleitung 54 aufweisen.

Im bevorzugten Abreinigungsverfahren wird bzw. werden vorzugsweise das Zeitintervall T1 zwischen den Abreinigungsvorgängen 57, insbesondere innerhalb des jeweiligen Abreinigungszyklus 58, und/oder das Zeitintervall T2 zwischen dem Ende eines der mindestens zwei Abreinigungszyklen 58 verändert.

Insbesondere werden die Zeitintervalle T1 zwischen aufeinander folgenden Abreinigungsvorgängen 57 jeweils im Abreinigungsverfahren verändert. Im Sinne der vorliegenden Erfindung ist das Merkmal, dass "zwei Abreinigungsvorgänge 57 aufeinander folgen", vorzugsweise so zu verstehen, dass kein weiterer Abreinigungsvorgang 57 zwischen den zwei aufeinander folgenden Abreinigungsvorgängen 57 erfolgt. Entsprechendes gilt für aufeinander folgende Abreinigungszyklen 58.

Weist der Filter 19 mindestens drei Filterabschnitte 21 auf, werden im Abreinigungsverfahren das Zeitintervall T1 zwischen den aufeinander folgenden Abreinigungsvorgängen 57 eines ersten und zweiten Filterabschnitts 21 und das Zeitintervall T2 zwischen den aufeinander folgenden Abreinigungsvorgängen 57 des zweiten und eines dritten Filterabschnitts 21 jeweils verändert.

Vorzugsweise werden bzw. wird das Zeitintervall T1 und/oder das Zeitintervall T2 mittels einer Regelung 59 verändert und/oder wird im bevorzugten Abreinigungsverfahren eine Regelung 59 durchgeführt, die eine Veränderung bzw. Variation der Zeitintervalle T1 und T2 bewirkt.

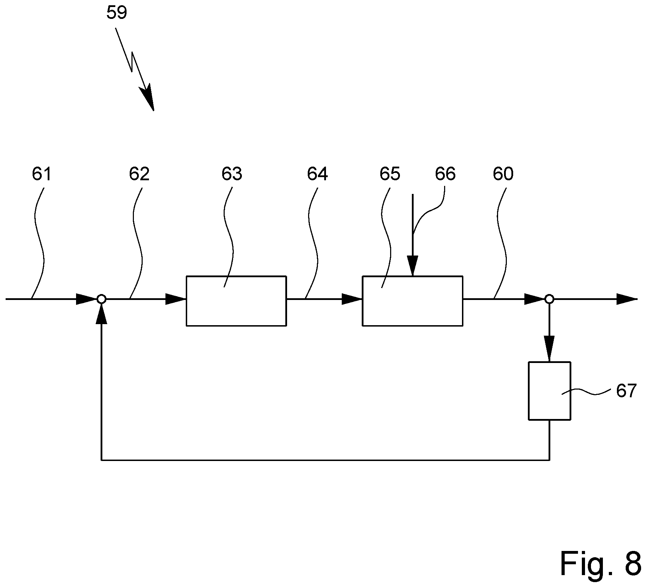

Fig. 8 zeigt diesbezüglich ein schematisches Blockschaltbild der dem bevorzugten Abreinigungsverfahren zugrundeliegenden Regelung 59 bzw. des Regelkreises der Regelung 59.

Vorzugsweise wird in dem Abreinigungsverfahren und/oder der Regelung 59 der Differenzdruck DP zwischen dem Filtereingang 24 und dem Filterausgang 25 geregelt und/oder als Regelgröße 60 in der Regelung 59 verwendet.

Vorzugsweise wird der Regelung 59 ein Solldifferenzdruck SP als Führungsgröße 61 - insbesondere exogen - vorgegeben.

Der Solldifferenzdruck SP beträgt vorzugsweise mehr als 1000 Pa, insbesondere mehr als 2000 Pa, besonders bevorzugt mehr als 3000 Pa, und/oder weniger als 7000 Pa, insbesondere weniger als 6000 Pa, besonders bevorzugt weniger als 5000 Pa. Ganz besonders bevorzugt beträgt der Solldifferenzdruck SP zumindest im Wesentlichen 4000 Pa.

Vorzugsweise wird der Solldifferenzdruck SP im Abreinigungsverfahren konstant gehalten. Es sind jedoch auch andere Verfahrensvarianten möglich, bei denen der Solldifferenzdruck SP verändert wird.

Vorzugsweise wird die Differenz zwischen dem Solldifferenzdruck SP und dem Differenzdruck DP als Regelabweichung 62 in der Regelung 59 und/oder im Abreinigungsverfahren verwendet.

Die Regelung 59 und/oder das Abreinigungsverfahren verwendet bzw. verwenden vorzugsweise einen Regler, insbesondere einen PID-Regler 63. Es ist jedoch auch möglich, andere Regler in der Regelung 59 und/oder im Abreinigungsverfahren zu verwenden.

Die Auslösung eines Abreinigungsvorgangs 57 und/oder das Öffnen des Ventils 31 bzw. eines der Ventile 31 bzw. die Länge des Zeitintervalls T1 und/oder T2 wird vorzugsweise als Stellgröße 64 in der Regelung 59 und/oder im Abreinigungsverfahren verwendet.

Der Regler ist vorzugsweise dazu ausgebildet, mittels der Regelabweichung 62 die Stellgröße 64 zu bestimmen, insbesondere wobei die Regelabweichung 62 mit einem Faktor multipliziert, über eine festgelegte Zeit integriert und/oder abgeleitet wird.

Das Abreinigungsverfahren und/oder die Regelung 59 verwendet vorzugsweise das Filtersystem 17 und/oder die Abreinigungsvorrichtung 20, vorzugsweise zusammen mit der Speichereinrichtung 28, als Regelstrecke 65.

Wie in Fig. 8 dargestellt, wirkt optional eine Störgröße 66 auf das Abreinigungsverfahren und/oder die Regelung 59, insbesondere auf die Regelstrecke 65. Insbesondere zählen zu möglichen Störgrößen 66 die zunehmende Zusetzung bzw. Verschmutzung des Filters 19, insbesondere der Filterabschnitte 21, und/oder die Bildung bzw. Zunahme des Filterkuchens 32, der Grad der Staubbeladung des Rohgases 23, die Strömungsgeschwindigkeit im Anlagengehäuse 2, Quantität und Qualität der den Anlagengehäuse 2 zugeführten Suspension 12 und/oder Quantität und Qualität der dem Anlagengehäuse 2 zugeführten Zuluft 9.

Vorzugsweise wird im Abreinigungsverfahren und/oder in der Regelung 59 der Differenzdruck DP und/oder die Regelabweichung 62 mit einem Regelfilter 67 gefiltert, vorzugsweise mit einer Tiefpasscharakteristik und/oder derart, dass durch einen Abreinigungsvorgang 57 und/oder die Abreinigungsvorgänge 57 eines Abreinigungszyklus 58 hervorgerufene Spitzen bzw. Schwankungen des Differenzdrucks DP zumindest im Wesentlichen unterdrückt und/oder gefiltert werden.

Wie bereits erläutert, wird das Zeitintervall T1 zwischen zwei aufeinander folgenden Abreinigungsvorgängen 57 und/oder das Zeitintervall T2 zwischen zwei aufeinander folgenden Abreinigungszyklen 58 mit jeweils mehreren Abreinigungsvorgängen 57 durch eine Regelung 59 bestimmt, die vorzugsweise den Regelfilter 67 aufweist.

Der Regelfilter 67 ist vorzugsweise derart ausgebildet oder ausgelegt, dass sowohl Druckspitzen, die durch den jeweiligen Abreinigungsvorgang 57, insbesondere durch Einleiten von Druckluft, erzeugt werden, als auch Druckabweichungen aufgrund des nach Beendigung eines Abreinigungsvorgangs 57 veränderten Differenzdrucks DP geglättet und/oder gemittelt werden.

Vorzugsweise weist der Regelfilter 67 eine drei-dB-Eckfrequenz oder Grenzfrequenz einer bevorzugten Tiefpasscharakteristik auf, die kleiner als $1/(2 \times \pi \times$ Zeitkonstante) ist, wobei die Zeitkonstante vorzugsweise größer als das minimale Zeitintervall T1, das minimale Zeitintervall T2 und/oder größer als 1 s, vorzugsweise größer als 2 s oder 4 s, insbesondere größer als 5 s, ist. Alternativ oder zusätzlich ist die Zeitkonstante vorzugsweise geringer als die Summe der Zeitintervalle T1 der Abreinigungsvorgänge 57 eines Abreinigungszyklus 58, geringer als 30 s, vorzugsweise geringer als 25 s, insbesondere geringer als 20 s oder 15 s. Der Regelfilter 67 kann jedoch auch eine andere Filtercharakteristik als eine Tiefpasscharakteristik aufweisen, wobei bevorzugt ist, dass diese dazu ausgebildet ist, durch Abreinigungsvorgänge 57 hervorgerufene Abweichungen des Differenzdrucks DP zu glätten.

Der Differenzdruck DP bzw. die Differenz zwischen Differenzdruck DP und Solldifferenzdruck SP gilt im Sinne der vorliegenden Erfindung vorzugsweise dann als geglättet, wenn die durch oder bei einem Abreinigungsvorgang 57 hervorgerufenen Abweichungen um mehr als 10 %, vorzugsweise mehr als 20 %, insbesondere mehr als 30 % oder 40 % reduziert oder gedämpft werden.

Bei einer besonders bevorzugten Ausführungsform ist die Regelung 59 so ausgelegt, dass der Regelfilter 67 Frequenzen oberhalb von 10 Hz, vorzugsweise oberhalb von 5 Hz, insbesondere oberhalb von 2 Hz oder 1 Hz, um mehr als 50 % dämpft.

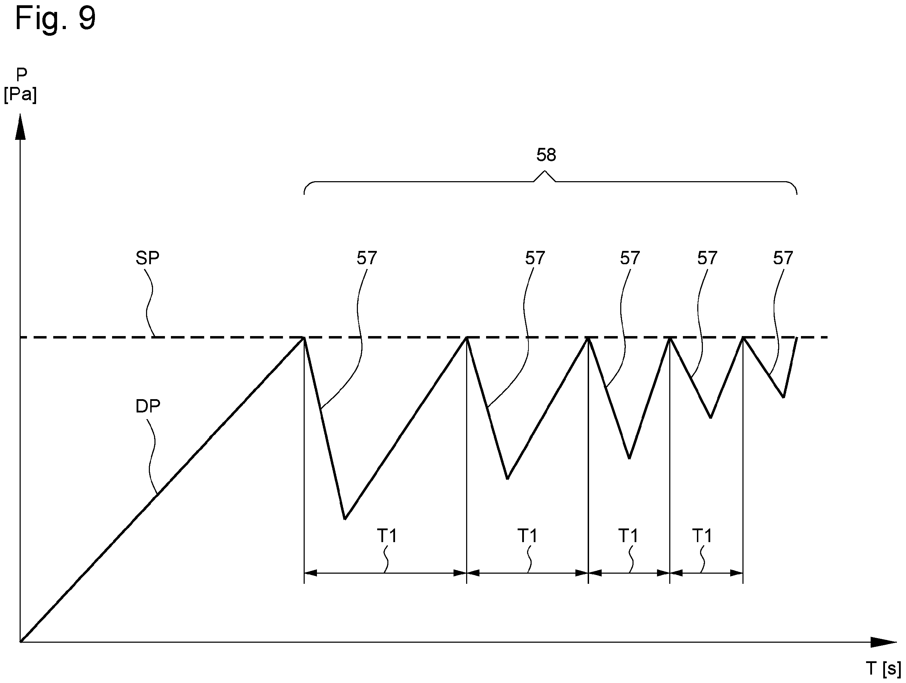

Fig. 9 zeigt eine schematische Darstellung des Drucks P als Funktion der Zeit T im bevorzugten Abreinigungsverfahren gemäß einer ersten Verfahrensvariante.

Beim dargestellten Abreinigungsverfahren werden vorzugsweise fünf Filterabschnitte 21 mittels jeweils eines Abreinigungsvorgangs 57 in einem Abreinigungszyklus 58 abgereinigt, wobei die Zeitintervalle T1 zwischen den Abreinigungsvorgängen 57 jeweils verändert werden.

Im dargestellten Beispiel werden die Zeitintervalle T1 zwischen den Abreinigungsvorgängen 57 mit zunehmender Zusetzung bzw. Verschmutzung der Filterabschnitte 21, insbesondere des Filtergewebes 50, und/oder mit der Zeit kleiner.

Vorzugsweise ist die Zeit, in der ein Abreinigungsvorgang 57 abgeschlossen wird bzw. erfolgt, kleiner als 10 s, insbesondere kleiner als 5 s, besonders bevorzugt kleiner als 2 s. Ganz besonders bevorzugt beträgt die Zeit eines Abreinigungsvorgangs 57 zumindest im Wesentlichen 1 s.

Vorzugsweise beträgt die Zeit für einen Abreinigungsvorgang 57 weniger als die Zeit, die abgereinigte Partikel, insbesondere der Suspensionsstaub und/oder der Filterkuchen 32, benötigt bzw. benötigen, um aus dem unmittelbaren Ansaugbereich des jeweiligen Filterabschnitts 21 während des Abreinigungsvorgangs 57 zu gelangen bzw. fallen.

Insbesondere wird während und/oder nach einem Abreinigungsvorgang 57 ein Wiederanfiltrieren durch den Abreinigungsvorgang 57 abgereinigte Partikel verhindert, vermieden oder verringert.

Vorzugsweise werden die Zeitintervalle T1 zwischen Abreinigungsvorgängen 57 mit einem Maximalwert und/oder einem Minimalwert beschränkt, vorzugsweise wobei der Maximalwert und/oder der Minimalwert exogen der Regelung 59 und/oder dem Abreinigungsverfahren vorgegeben wird bzw. werden.

Besonders bevorzugt beträgt der Maximalwert weniger als 500 s, insbesondere weniger als 400 s, besonders bevorzugt weniger als 300 s, und/oder der Minimalwert mehr als 5 s, insbesondere mehr als 10 s, besonders bevorzugt mehr als 15 s.

Vorzugsweise steigt der Differenzdruck DP bei der Filtration mittels des Filters 19, insbesondere wenn kein Abreinigungsvorgang 57 erfolgt.

Im dargestellten Verlauf nimmt der Differenzdruck DP vorzugsweise zumindest im Wesentlichen linear mit der Zeit T zu bzw. nimmt die Differenz zwischen dem Differenzdruck DP und dem Solldifferenzdruck SP zumindest im Wesentlichen linear mit der Zeit T ab. Es sind jedoch auch andere Kurvenverläufe möglich.

Ein Abreinigungsvorgang 57 wird vorzugsweise dann ausgelöst, wenn der Differenzdruck DP den Solldifferenzdruck SP erreicht, diesen überschreitet und/oder sich diesem annähert. Insbesondere wird ein Abreinigungsvorgang 57 in Abhängigkeit vom Differenzdruck DP, der Regelabweichung 62 und/oder vom - vorzugsweise vorherigen - Zeitintervall T1 und/oder Zeitintervall T2 ausgelöst. Besonders bevorzugt bestimmt der Regler der Regelung 59 den Zeitpunkt der Auslösung eines Abreinigungsvorgangs 57 bzw. Beginn eines Abreinigungszyklus 58.

Vorzugsweise fällt der Differenzdruck DP während des Abreinigungsvorgangs 57 und/oder durch den Abreinigungsvorgang 57. Insbesondere nimmt die Differenz zwischen dem Differenzdruck DP und dem Solldifferenzdruck SP während des Abreinigungsvorgangs 57 und/oder durch den Abreinigungsvorgang 57 zu.

Wie in Fig. 9 dargestellt, steigt der Differenzdruck DP nach Beendigung des Abreinigungsvorgangs 57 wieder an bzw. nimmt die Differenz zwischen dem Differenzdruck DP und Solldifferenzdruck SP ab.

Besonders bevorzugt steigt der Differenzdruck DP nach Abreinigung bzw. nach einem Abreinigungsvorgang 57 linear und/oder zumindest im Wesentlichen wie vor Abreinigung bzw. einem Abreinigungsvorgang 57. Es sind jedoch auch andere Kurvenverläufe möglich, insbesondere bei denen die Steigung des Differenzdrucks DP mit der Zeit T und/oder mit der Anzahl der ausgelösten Abreinigungsvorgängen 57 zunimmt.

In Abhängigkeit vom Regler der Regelung 59 wird nach dem ersten Abreinigungsvorgang 57 ein weiterer Abreinigungsvorgang 57 ausgelöst, insbesondere wenn der Differenzdruck DP erneut den Solldifferenzdruck SP erreicht, überschreitet und/oder sich diesem annähert.

Vorzugsweise sinkt der Differenzdruck DP bei einem Abreinigungsvorgang 57 zumindest im Wesentlichen auf den gleichen Wert wie bei dem vorherigen Abreinigungsvorgang 57 bzw. ist der Differenzdruck DP nach aufeinander folgenden Abreinigungsvorgängen 57 zumindest im Wesentlichen gleich groß.

Wie Fig. 9 veranschaulicht, steigt der Differenzdruck DP, der jeweils unmittelbar nach Beendigung eines Abreinigungsvorgangs 57 vorliegt, mit der Zeit T an.

Insbesondere nimmt die Zeit, bis der Differenzdruck DP den Solldifferenzdruck SP erreicht, übersteigt und/oder sich dem Solldifferenzdruck SP annähert, mit der Zeit T ab.

Das Zeitintervall T1 zwischen zwei aufeinander folgenden Abreinigungsvorgängen 57, insbesondere zwischen dem Beginn zwei aufeinander folgender Abreinigungsvorgänge 57 und/oder dem Ende zwei aufeinander folgender Abreinigungsvorgänge 57 und/oder dem Ende eines vorübergehend und dem Anfang eines folgenden Abreinigungsvorgangs 57, wird vorzugsweise während der Filtration mittels des Filters 19 und/oder mit der Zeit T - vorzugsweise zumindest im Wesentlichen exponentiell - kleiner.

Besonders bevorzugt wird mit dem bevorzugten Abreinigungsverfahren das Zeitintervall T1 und/oder das Zeitintervall T2 geregelt und/oder als Regelgröße 60 bzw. Regelgrößen 60 in der Regelung 59 verwendet.

Insbesondere werden/wird das Zeitintervall T1 und/oder das Zeitintervall T2 als Stellgröße 64 bzw. Stellgrößen 64 in der Regelung 59 oder im Abreinigungsverfahren verwendet.

Besonders bevorzugt werden die Zeitintervalle T1 bzw. T2 nicht unmittelbar aus der aus dem Differenzdruck DP oder dem Vergleich des Differenzdrucks DP mit dem Solldifferenzdruck SP abgeleitet. Es ist bevorzugt, dass das Zeitintervall T1 bzw. das Zeitintervall T2 durch die Regelung 59, besonders bevorzugt mittels der Steuereinrichtung 29, berechnet, bestimmt oder ermittelt werden.

Beim dargestellten Kurvenverlauf werden alle fünf Filterabschnitte 21 in einem Abreinigungszyklus 58 abgereinigt. Vorzugsweise beginnt nach dem Ende des dargestellten Abreinigungszyklus 58 ein darauf folgender Abreinigungszyklus 58 (nicht dargestellt).

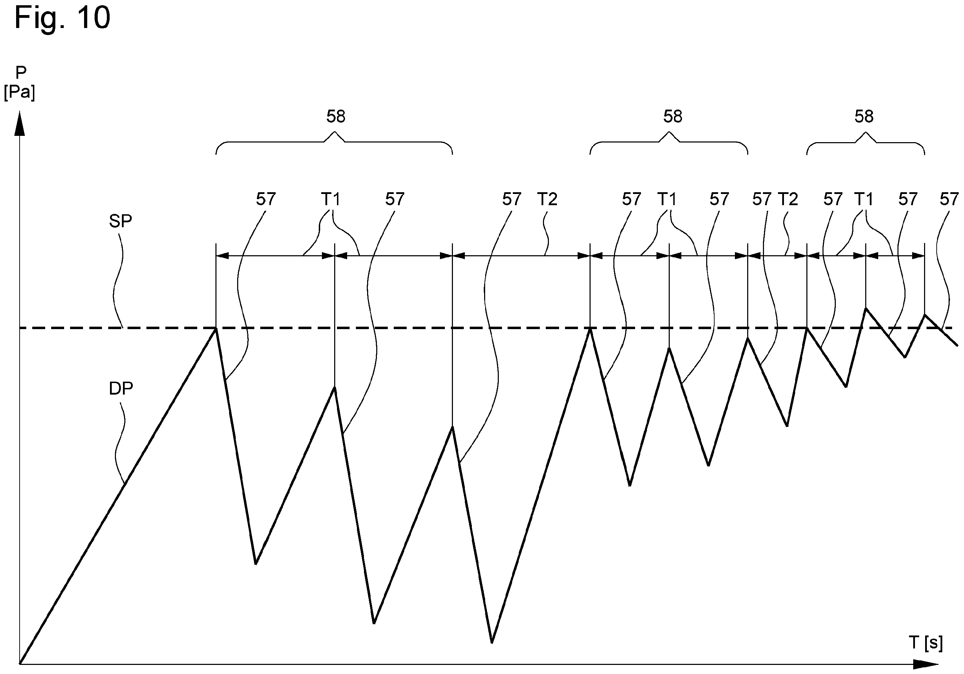

Fig. 10 zeigt eine schematische Darstellung des Drucks P als Funktion der Zeit T im bevorzugten Abreinigungsverfahren gemäß einer zweiten Verfahrensvariante, insbesondere wobei das Zeitintervall T1 innerhalb eines Abreinigungszyklus 58 zumindest im Wesentlichen konstant ist.

Vorzugsweise wird ein Abreinigungsvorgang 57 zu Beginn des jeweiligen Abreinigungszyklus 58 dann ausgelöst, wenn der Differenzdruck DP den Solldifferenzdruck SP erreicht, diesen überschreitet und/oder sich dem Solldifferenzdruck SP annähert.

Vorzugsweise wird das Zeitintervall T1 zwischen aufeinander folgenden Abreinigungsvorgängen 57 eines Abreinigungszyklus 58, insbesondere mittels der bereits zuvor erläuterten Regelung 59, verändert und/oder für den gesamten Abreinigungszyklus 58 auf einen zumindest im Wesentlichen konstanten Wert festgelegt. Insbesondere erfolgen die darauf folgenden Abreinigungsvorgänge 57 innerhalb des Abreinigungszyklus 58 jeweils unabhängig vom Differenzdruck DP und/oder Solldifferenzdruck SP und/oder nach dem Zeitintervall T1.

Das Zeitintervall T1 zwischen aufeinander folgenden Abreinigungsvorgängen 57 innerhalb eines Abreinigungszyklus 58 wird vorzugsweise vor und/oder zu Beginn des Abreinigungszyklus 58, vorzugsweise mittels der Regelung 59, verändert und/oder festgelegt und/oder während des gesamten Abreinigungszyklus 58 konstant auf dem zuvor festgelegten Wert gehalten.

Wie in Fig. 10 veranschaulicht, kann bei dieser Verfahrensvariante der Differenzdruck DP, der jeweils zu Beginn eines Abreinigungsvorgangs 57 und/oder am Ende eines Abreinigungsvorgangs 57 vorliegt, innerhalb eines Abreinigungszyklus 58 sinken und/oder steigen.

Im dargestellten Beispiel weist der Filter 19 vorzugsweise drei Filterabschnitte 21 auf und/oder umfasst ein Abreinigungszyklus 58 drei Abreinigungsvorgänge 57.

Sind alle Filterabschnitte 21 in einem Abreinigungszyklus 58 mittels der Abreinigungsvorgänge 57 abgereinigt, ist der Abreinigungszyklus 58 beendet.

Vorzugsweise beginnt nach Beendigung eines Abreinigungszyklus 58 zeitlich um das Zeitintervall T2 beabstandet ein weiterer, darauf folgender Abreinigungszyklus 58, insbesondere wobei das Zeitintervall T2 aufeinander folgender Abreinigungszyklen 58 verändert wird.

Vorzugsweise beginnt ein weiterer Abreinigungszyklus 58 mit der Auslösung eines Abreinigungsvorgangs 57. Wie in Fig. 10 dargestellt, werden die Zeitintervalle T1 im zweiten Abreinigungszyklus 58 im Vergleich zum ersten Abreinigungszyklus 58 verändert.

Vorzugsweise werden die Zeitintervalle T1 von Abreinigungszyklus 58 zu Abreinigungszyklus 58 und/oder mit der Zeit T kleiner. Es sind jedoch auch andere Verläufe möglich.

Vorzugsweise nähert sich der Differenzdruck DP mit der Zeit T zunehmend dem Solldifferenzdruck SP an.

Wenn der Differenzdruck DP nicht mehr mittels des Abreinigungsverfahrens und/oder der Regelung 59 geregelt werden kann, insbesondere wenn der Differenzdruck DP den Solldifferenzdruck SP um einen zuvor festgelegten Wert überschreitet und/oder das Zeitintervall T1 und/oder das Zeitintervall T2 einen zuvor festgelegten Minimalwert erreicht, wird vorzugsweise der Filter 19 vollständig, insbesondere nass, gereinigt, vorzugsweise wobei die Anlage 1 und/oder das Filtersystem 17 außer Betrieb genommen wird und/oder die Filtration mittels des Filters 19 eingestellt wird.

Vorzugsweise werden die Zeitintervalle T1 derart verändert, dass die Anzahl der Abreinigungsvorgänge 57 minimiert wird und/oder die Zeit bis zur notwendigen Nassreinigung des Filters 19 maximiert wird.

**Bezugszeichenliste:**

| | |
|---|---|
| 1 | Anlage |
| 2 | Anlagengehäuse |
| 3 | Gehäuseeinlass |
| 4 | Gehäuseauslass |
| 5 | Zuluftbereich |
| 6 | Sprühbereich |
| 7 | Filterbereich |
| 8 | Dombereich |
| 9 | Zuluft |
| 10 | Siebboden |
| 11 | Suspensionsbehälter |
| 12 | Suspension |
| 13 | Suspensionspumpe |
| 14 | Suspensionsleitung |
| 15 | Düse |
| 16 | Wursterrohr |
| 17 | Filtersystem |
| 18 | Anschlussvorrichtung |
| 19 | Filter |
| 20 | Abreinigungsvorrichtung |
| 21 | Filterabschnitte |
| 22 | Filterkerze |
| 23 | Rohgas |
| 24 | Filtereingang |
| 25 | Filterausgang |
| 26 | Reingas |
| 27 | Abluft |
| 28 | Speichereinrichtung |
| 29 | Steuereinrichtung |
| 30 | Drucksensor |
| 31 | Ventil |
| 32 | Filterkuchen |
| 33 | Seitenwand |
| 34 | Öffnung |
| 35 | erster Abschnitt (mit Öffnungen) |
| 36 | zweiter Abschnitt (öffnungsfrei) |

| | |
|---|---|
| 37 | dritter Abschnitt (zylindrisch) |
| 38 | Flanschstutzen |
| 39 | Klemmstutzen |
| 40 | Nut |
| 41 | Dichtung |
| 42 | Innenseite (Seitenwand) |
| 43 | Außenseite (Seitenwand) |
| 44 | Kolben |
| 45 | Kegelsitz |
| 46 | Feder |
| 47 | Ventilkammer |
| 48 | Verteilerrohr |
| 49 | Bohrung |
| 50 | Filtergewebe |
| 51 | Speichereinheit |
| 52 | Ringspeicher |
| 53 | Rohrsegment |
| 54 | Druckluftleitung |
| 55 | Steuerluftleitung |
| 56 | Durchführung |
| 57 | Abreinigungsvorgang |
| 58 | Abreinigungszyklus |
| 59 | Regelung |
| 60 | Regelgröße |
| 61 | Führungsgröße |
| 62 | Regelabweichung |
| 63 | PID-Regler |
| 64 | Stellgröße |
| 65 | Regelstrecke |
| 66 | Störgröße |
| 67 | Regelfilter |
| A | Außenquerschnitt |
| E | Ebene |
| H | Hauptachse |
| L | Längsachse |
| Q | Innenquerschnitt |
| Q1 | größter Innenquerschnitt |
| Q2 | kleinster Innenquerschnitt |
| P | Druck |
| DP | Differenzdruck |
| SP | Solldifferenzdruck |
| T | Zeit |
| T1 | Zeitintervall (Abreinigungsvorgang) |
| T2 | Zeitintervall (Abreinigungszyklus) |
| W1 | erster Winkel |
| W2 | zweiter Winkel |
| W3 | dritter Winkel |

**Patentansprüche**

1. Abreinigungsvorrichtung (20) zur Abreinigung eines Filters (19), mit einer Anschlussvorrichtung (18) zum Anschluss des Filters (19) an die Abreinigungsvorrichtung (20),

    wobei die Anschlussvorrichtung (18) eine Seitenwand (33) aufweist, die einen entlang einer Längsachse (L) der Anschlussvorrichtung (18) zunehmenden Innenquerschnitt (Q) begrenzt und seitlich Öffnungen (34) mit zugeordneten Hauptachsen (H) aufweist,

wobei die Seitenwand (33) einen ersten Abschnitt (35) mit den Öffnungen (34), einen zweiten, öffnungsfreien Abschnitt (36) im Bereich des größten Innenquerschnitts (Q1) und einen dritten Abschnitt (37) mit dem kleinsten Innenquerschnitt (Q2) der Anschlussvorrichtung (18) aufweist,

wobei die Anschlussvorrichtung (18) am axialen Ende des zweiten Abschnitts (36) einen Stutzen zur Verbindung mit dem Filter (19) und am axialen Ende des dritten Abschnitts (37) einen Stutzen zur Verbindung mit der Abreinigungsvorrichtung (20) aufweist, und

wobei die Anschlussvorrichtung (18) mittels des Stutzens am axialen Ende des dritten Abschnitts (37) mit der Abreinigungsvorrichtung (20) verbunden ist.

2. Abreinigungsvorrichtung nach Anspruch 1, **dadurch gekennzeichnet, dass** die Hauptachsen (H) der Öffnungen (34) schräg zur Seitenwand (33) verlaufen und von außen nach innen jeweils in Richtung eines Innenquerschnitts (Q) weisen, der größer ist als ein Innenquerschnitt (Q), in den die jeweilige Öffnung (34) mündet, und/oder dass die Öffnungen (34) an einer oder mehreren Ebenen (E) orientiert sind, die orthogonal zur Längsachse (L) ausgerichtet ist bzw. sind.

3. Abreinigungsvorrichtung nach Anspruch 1 oder 2, **dadurch gekennzeichnet, dass** der Innenquerschnitt (Q) entlang der Längsachse (L) mit einem ersten Winkel (W1) zunimmt, der größer als 5 ° und/oder kleiner als 18 °, vorzugsweise zumindest im Wesentlichen gleich 12 °, ist.

4. Abreinigungsvorrichtung nach einem der voranstehenden Ansprüche, **dadurch gekennzeichnet, dass** die Hauptachsen (H) der Öffnungen (34) die Längsachse (L) in einem zweiten Winkel (W2) schneiden und/oder die Hauptachsen (H) der Öffnungen (34) mit der Längsachse (L) in einer Längsschnittansicht der Anschlussvorrichtung (18) einen zweiten Winkel (W2) einschließen, wobei der zweite Winkel (W2) kleiner als 90 °, vorzugsweise zumindest im Wesentlichen gleich 45 °, ist.

5. Abreinigungsvorrichtung nach einem der voranstehenden Ansprüche, **dadurch gekennzeichnet, dass** ein Durchmesser und/oder eine Breite des kleinsten Innenquerschnitts (Q2) größer als 30 mm und/oder kleiner als 70 mm, vorzugsweise zumindest im Wesentlichen gleich 50,8 mm, ist und/oder mehr als 20 %, vorzugsweise mehr als 30 %, und/oder weniger als 60 %, vorzugsweise weniger als 50 %, eines Durchmessers und/oder einer Breite des größten Innenquerschnitts (Q1) beträgt.

6. Abreinigungsvorrichtung nach einem der voranstehenden Ansprüche, **dadurch gekennzeichnet, dass** die Öffnungen (34) in einer oder mehreren Ebenen (E) orientiert sind, wobei die Ebenen (E) jeweils durch mindestens drei Öffnungen (34) definiert sind und/oder jeweils mindestens drei Öffnungen (34) in den Ebenen (E) liegen und/oder münden.

7. Abreinigungsvorrichtung nach Anspruch 6, **dadurch gekennzeichnet, dass** die Ebenen (E) entlang der Längsachse (L) - vorzugsweise zumindest im Wesentlichen äquidistant - zueinander beabstandet und/oder parallel zueinander angeordnet sind; und/oder die Anzahl der Öffnungen (34) je Ebene (E) mit zunehmenden Innenquerschnitt (Q) zunimmt.

8. Abreinigungsvorrichtung nach einem der voranstehenden Ansprüche, **dadurch gekennzeichnet, dass** die Öffnungen (34) - zumindest entlang eines Innenquerschnitts (Q) - kreisförmig angeordnet sind und/oder mehrere konzentrische Kreise bilden; und/oder dass die Öffnungen (34) über einen Innenquerschnitt (Q) und/oder eine Innenseite (42) der Seitenwand (33) gleichmäßig verteilt angeordnet sind; und/oder

dass die Öffnungen (34) einen Kreis- oder Rechteckquerschnitt aufweisen und/oder als Bohrung, als Langloch, zylindrisch, rotationssymmetrisch und/oder achsensymmetrisch zur jeweiligen Hauptachse (H) ausgebildet sind.

9. Abreinigungsvorrichtung nach einem der voranstehenden Ansprüche, **dadurch gekennzeichnet, dass** die Öffnungen (34) einen Durchmesser und/oder eine Breite aufweisen, der bzw. die mehr als 2 % und/oder weniger als 20 %, vorzugsweise zumindest im Wesentlichen gleich 10 %, des Durchmessers und/oder der Breite des größten Innenquerschnitts (Q1) beträgt; und/oder

dass die Öffnungen (34) einen Durchmesser und/oder eine Breite von mindestens 5 mm und/oder höchstens 40 mm, insbesondere von zumindest im Wesentlichen 20 mm, aufweisen; und/oder
dass die Öffnungen (34) länglich und/oder rohrartig ausgebildet sind, vorzugsweise mit einer Länge, die größer als der Durchmesser und/oder die Breite der Öffnungen (34) ist.

10. Abreinigungsvorrichtung nach einem der voranstehenden Ansprüche, **dadurch gekennzeichnet, dass** der öffnungsfreie Abschnitt (36) den entlang der Längsachse (L) zunehmenden Innenquerschnitt (Q) zumindest teilweise aufweist.

11. Abreinigungsvorrichtung nach einem der vorstehenden Ansprüche, **dadurch gekennzeichnet, dass** die Innenseite (42) der Seitenwand (33) - zumindest teilweise - konkav und/oder konvex, insbesondere glockenförmig, ausgebildet ist.

12. Abreinigungsvorrichtung nach einem der vorstehenden Ansprüche, **dadurch gekennzeichnet, dass** der dritte Abschnitt (37) einem konstanten, vorzugsweise zylindrischen, Innenquerschnitt (Q) aufweist.

13. Filtersystem (17) mit einem Filter (19) und einer Abreinigungsvorrichtung (20) zur Abreinigung des Filters (19), wobei der Filter (19) mittels einer Anschlussvorrichtung (18) an die Abreinigungsvorrichtung (20) angeschlossen ist, wobei die Abreinigungsvorrichtung (20) gemäß einem der Ansprüche 1 bis 12 ausgebildet ist, und wobei die Anschlussvorrichtung (18) mittels des Stutzens am axialen Ende des zweiten Abschnitts (36) mit dem Filter (19) und mittels des Stutzens am axialen Ende des dritten Abschnitts (37) mit der Abreinigungsvorrichtung (20) verbunden ist.

14. Anlage (1), insbesondere für Beschichtungsprozesse, mit einem Anlagengehäuse (2), einem Filter (19) und einer Abreinigungsvorrichtung (20) zur Abreinigung des Filters (19),
wobei das Anlagengehäuse (2) im Inneren eine Anschlussvorrichtung (18) aufweist, die den Filter (19) an die Abreinigungsvorrichtung (20) anschließt, wobei die Abreinigungsvorrichtung (20) nach einem der Ansprüche 1 bis 12 ausgebildet ist, und wobei die Anschlussvorrichtung (18) mittels des Stutzens am axialen Ende des zweiten Abschnitts (36) mit dem Filter (19) und mittels des Stutzens am axialen Ende des dritten Abschnitts (37) mit der Abreinigungsvorrichtung (20) verbunden ist.

**Claims**

1. Cleaning device (20) for cleaning a filter (19), with a connection device (18) for connecting the filter (19) to the cleaning device (20),

the connection device (18) having a side wall (33) which delimits an internal cross-section (Q) increasing along a longitudinal axis (L) of the connection device (18) and has lateral openings (34) with associated main axes (H),
wherein the side wall (33) has a first section (35) with the openings (34), a second section (36) free of openings in the region of the largest internal cross-section (Q1) and a third section (37) with the smallest internal cross-section (Q2) of the connection device (18),
wherein the connection device (18) has a connecting piece at the axial end of the second section (36) for connection to the filter (19) and a connecting piece at the axial end of the third section (37) for connection to the cleaning device (20), and
wherein the connection device (18) is connected to the cleaning device (20) by means of the connecting piece at the axial end of the third section (37).

2. Cleaning device according to claim 1, **characterised in that** the main axes (H) of the openings (34) run obliquely to the side wall (33) and point from the outside inwards in each case in the direction of an internal cross-section (Q) which is larger than an internal cross-section (Q) into which the respective opening (34) opens, and/or **in that** the openings (34) are oriented on one or more planes (E) which is/are oriented orthogonally to the longitudinal axis (L).

3. Cleaning device according to claim 1 or 2, **characterised in that** the internal cross-section (Q) along the longitudinal axis (L) increases with a first angle (W1) greater than 5 ° and/or less than 18 °, preferably at least substantially equal to 12 °.

4. Cleaning device according to one of the preceding claims, **characterized in that** the main axes (H) of the openings (34) intersect the longitudinal axis (L) at a second angle (W2) and/or the main axes (H) of the openings (34) form a second angle (W2) with the longitudinal axis (L) in a longitudinal sectional view of the connection device (18), wherein the second angle (W2) is smaller than 90 °, preferably at least substantially equal to 45 °.

5. Cleaning device according to any one of the preceding claims, **characterized in that** a diameter and/or a width of the smallest internal cross-section (Q2) is greater than 30 mm and/or less than 70 mm, preferably at least substantially equal to 50.8 mm, and/or is more than 20%, preferably more than 30%, and/or less than 60%, preferably less than 50%, of a diameter and/or a width of the largest internal cross-section (Q1).

6. Cleaning device according to one of the preceding claims, **characterised in that** the openings (34) are oriented in one or more planes (E), the planes (E) each being defined by at least three openings (34) and/or at least three openings (34) each lying and/or opening in the planes (E).

7. Cleaning device according to claim 6, **characterised**

**in that** the planes (E) are spaced apart from and/or parallel to one another along the longitudinal axis (L) - preferably at least substantially equidistantly; and/or the number of openings (34) per plane (E) increases with increasing internal cross-section (Q).

8. Cleaning device according to one of the preceding claims, **characterised in that** the openings (34) - at least along an inner cross-section (Q) - are arranged in a circle and/or form several concentric circles; and/or **in that** the openings (34) are arranged uniformly distributed over an inner cross-section (Q) and/or an inner side (42) of the side wall (33); and/or **in that** the openings (34) have a circular or rectangular cross-section and/or are formed as a bore, as an elongated hole, cylindrically, rotationally symmetrically and/or axially symmetrically to the respective main axis (H).

9. Cleaning device according to one of the preceding claims, **characterized in that** the openings (34) have a diameter and/or a width which is more than 2% and/or less than 20%, preferably at least substantially equal to 10%, of the diameter and/or the width of the largest internal cross-section (Q1); and/or

   **in that** the openings (34) have a diameter and/or a width of at least 5 mm and/or at most 40 mm, in particular at least substantially 20 mm; and/or **in that** the openings (34) are elongated and/or tubular, preferably with a length which is greater than the diameter and/or the width of the openings (34).

10. Cleaning device according to any one of the preceding claims, **characterised in that** the opening-free section (36) has the internal cross-section (Q) increasing along the longitudinal axis (L) at least partially.

11. Cleaning device according to one of the preceding claims, **characterised in that** the inner side (42) of the side wall (33) is - at least partially - concave and/or convex, in particular bell-shaped.

12. Cleaning device according to one of the preceding claims, **characterised in that** the third section (37) has a constant, preferably cylindrical, internal cross-section (Q).

13. Filter system (17) with a filter (19) and a cleaning device (20) for cleaning the filter (19), wherein the filter (19) is connected to the cleaning device (20) by means of a connection device (18), wherein the cleaning device (20) is constructed according to one of the claims 1 to 12, and wherein the connection device (18) is connected to the filter (19) by means of the connecting piece at the axial end of the second section (36) and to the cleaning device (20) by means of the connecting piece at the axial end of the third section (37).

14. Plant (1), in particular for coating processes, with a plant housing (2), a filter (19) and a cleaning device (20) for cleaning the filter (19), wherein the system housing (2) has a connection device (18) in the interior which connects the filter (19) to the cleaning device (20), wherein the cleaning device (20) is constructed according to one of claims 1 to 12, and wherein the connection device (18) is connected to the filter (19) by means of the connecting piece at the axial end of the second section (36) and to the cleaning device (20) by means of the connecting piece at the axial end of the third section (37).

**Revendications**

1. Dispositif de nettoyage (20) destiné à nettoyer un filtre (19), avec un dispositif de raccordement (18) destiné à raccorder le filtre (19) au dispositif de nettoyage (20),

   dans lequel le dispositif de raccordement (18) présente une paroi latérale (33), qui délimite une section transversale intérieure (Q) augmentant le long d'un axe longitudinal (L) du dispositif de raccordement (18) et présente latéralement des ouvertures (34) avec des axes principaux (H) associés,
   dans lequel la paroi latérale (33) présente une première section (35) avec les ouvertures (34), une deuxième section sans ouverture (36) dans la zone de la section transversale intérieure la plus grande (Q1) et une troisième section (37) avec la section transversale intérieure la plus petite (Q2) du dispositif de raccordement (18),
   dans lequel le dispositif de raccordement (18) présente sur l'extrémité axiale de la deuxième section (36) une tubulure destinée à être reliée au filtre (19) et, sur l'extrémité axiale de la troisième section (37), une tubulure destinée à être reliée au dispositif de nettoyage (20), et
   dans lequel le dispositif de raccordement (18) est relié au dispositif de nettoyage (20) au moyen de la tubulure sur l'extrémité axiale de la troisième section (37).

2. Dispositif de nettoyage selon la revendication 1, **caractérisé en ce que** les axes principaux (H) des ouvertures (34) s'étendent de manière oblique par rapport à la paroi latérale (33) et pointent depuis l'extérieur vers l'intérieur respectivement en direction d'une section transversale intérieure (Q), qui est plus grande qu'une section transversale intérieure (Q), dans laquelle débouche l'ouverture (34) respective, et/ou que les ouvertures (34) sont orientées sur un ou plusieurs plans (E), qui sont dirigés de manière orthogonale par rapport à l'axe longitudinal (L).

3. Dispositif de nettoyage selon la revendication 1 ou 2, **caractérisé en ce que** la section transversale intérieure (Q) augmente le long de l'axe longitudinal (L) avec un premier angle (W1), qui est supérieur à 5° et/ou est inférieur à 18°, de préférence qui est au moins sensiblement égal à 12°.

4. Dispositif de nettoyage selon l'une quelconque des revendications précédentes, **caractérisé en ce que** les axes principaux (H) des ouvertures (34) coupent l'axe longitudinal (L) selon un deuxième angle (W2), et/ou les axes principaux (H) des ouvertures (34) forment avec l'axe longitudinal (L) dans une vue de coupe longitudinale du dispositif de raccordement (18) un deuxième angle (W2), dans lequel le deuxième angle (W2) est inférieur à 90°, de préférence est au moins sensiblement égal à 45°.

5. Dispositif de nettoyage selon l'une quelconque des revendications précédentes, **caractérisé en ce qu'**un diamètre et/ou une largeur de la section transversale intérieure la plus petite (Q2) sont supérieurs à 30 mm et/ou inférieurs à 70 mm, de préférence sont au moins sensiblement égaux à 50,8 mm, et/ou représentent plus de 20 %, de préférence plus de 30 %, et/ou moins de 60 %, de préférence moins de 50 %, d'un diamètre et/ou d'une largeur de la section transversale intérieure la plus grande (Q1).

6. Dispositif de nettoyage selon l'une quelconque des revendications précédentes, **caractérisé en ce que** les ouvertures (34) sont orientées dans un ou plusieurs plans (E), dans lequel les plans (E) sont définis respectivement par au moins trois ouvertures (34) et/ou respectivement au moins trois ouvertures (34) se situent et/ou débouchent dans les plans (E).

7. Dispositif de nettoyage selon la revendication 6, **caractérisé en ce que** les plans (E) sont disposés à distance les uns par rapport aux autres et/ou de manière parallèle les uns par rapport aux autres le long de l'axe longitudinal (L) - de préférence au moins de manière sensiblement équidistante ; et/ou le nombre des ouvertures (34) augmente par plan (E) au fur et à mesure que la section transversale intérieure (Q) augmente.

8. Dispositif de nettoyage selon l'une quelconque des revendications précédentes, **caractérisé en ce que** les ouvertures (34) sont disposées en forme de cercle - au moins le long d'une section transversale intérieure (Q) et/ou forment plusieurs cercles concentriques ; et/ou que les ouvertures (34) sont disposées selon une répartition homogène sur une section transversale intérieure (Q) et/ou sur un côté intérieur (42) de la paroi latérale (33) ; et/ou **que** les ouvertures (34) présentent une section transversale circulaire ou rectangulaire et/ou sont réalisées en tant qu'alésage, en tant que trou oblong, de manière cylindrique, de manière symétrique en rotation et/ou de manière axialement symétrique par rapport à l'axe principal (H) respectif.

9. Dispositif de nettoyage selon l'une quelconque des revendications précédentes, **caractérisé en ce que** les ouvertures (34) présentent un diamètre et/ou une largeur, qui représente respectivement plus de 2 % et/ou moins de 20 %, de préférence est au moins sensiblement égal ou égale à 10 % du diamètre et/ou de la largeur de la section transversale intérieure la plus grande (Q1) ; et/ou **que** les ouvertures (34) présentent un diamètre et/ou une largeur d'au moins 5 mm et/ou au maximum de 40 mm, en particulier d'au moins sensiblement 20 mm ; et/ou que les ouvertures (34) sont réalisées de manière allongée et/ou de manière tubulaire, de préférence avec une longueur, qui est plus grande que le diamètre et/ou que la largeur des ouvertures (34).

10. Dispositif de nettoyage selon l'une quelconque des revendications précédentes, **caractérisé en ce que** la section sans ouverture (36) présente au moins en partie la section transversale intérieure (Q) augmentant le long de l'axe longitudinal (L).

11. Dispositif de nettoyage selon l'une quelconque des revendications précédentes, **caractérisé en ce que** le côté intérieur (42) de la paroi latérale (33) est réalisé - au moins en partie - de manière concave et/ou de manière convexe, en particulier en forme de cloche.

12. Dispositif de nettoyage selon l'une quelconque des revendications précédentes, **caractérisé en ce que** la troisième section (37) présente une section transversale intérieure (Q) constante, de préférence cylindrique.

13. Système de filtrage (17) avec un filtre (19) et un dispositif de nettoyage (20) destiné à nettoyer le filtre (19), dans lequel le filtre (19) est raccordé au dispositif de nettoyage (20) au moyen d'un dispositif de raccordement (18), dans lequel le dispositif de nettoyage (20) est réalisé selon l'une quelconque des revendications 1 à 12, et dans lequel le dispositif de raccordement (18) est relié au filtre (19) sur l'extrémité axiale de la deuxième section (36) au moyen de la tubulure et au dispositif de nettoyage (20) sur l'extrémité axiale de la troisième section (37) au moyen de la tubulure.

**14.** Installation (1), en particulier pour des processus de revêtement, avec un boîtier d'installation (2), un filtre (19) et un dispositif de nettoyage (20) destiné à nettoyer le filtre (19),

dans laquelle le boîtier d'installation (2) présente à l'intérieur un dispositif de raccordement (18), qui raccorde le filtre (19) au dispositif de nettoyage (20), dans lequel le dispositif de nettoyage (20) est réalisé selon l'une quelconque des revendications 1 à 12,
et dans lequel le dispositif de raccordement (18) est relié au filtre (19) sur l'extrémité axiale de la deuxième section (36) au moyen de la tubulure et au dispositif de nettoyage (20) sur l'extrémité axiale de la troisième section (37) au moyen de la tubulure.

Fig. 1

Fig. 2

Fig. 3

Fig. 4

Fig. 5

Fig. 6

Fig. 7

Fig. 8

Fig. 9

EP 3 862 065 B1

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29823965 U1
- EP 1507579 B1
- WO 9603195 A1
- WO 2014110354 A2
- EP 1647319 A1
- JP 2008221106 A
- EP 2128394 A2